# FASCICULE DE BREVET EUROPEEN

(11) **EP 3 325 538 B1**
(45) Date de publication et mention de la délivrance du brevet: **03.03.2021**
(21) Numéro de dépôt: 17745846.0
(22) Date de dépôt: 10.07.2017
(51) Int. Cl.: C08G 69/26, C08L 77/06

(54) **COMPOSITION DE POLYAMIDE SEMI-CRISTALLIN DE HAUTE TEMPERATURE DE TRANSITION VITREUSE POUR MATERIAU COMPOSITE, SON PROCEDE DE FABRICATION ET SES UTILISATIONS**
HALBKRISTALLINE POLYAMIDZUSAMMENSETZUNG MIT EINER HOHEN GLASÜBERGANGSTEMPERATUR FÜR EIN VERBUNDMATERIAL, HERSTELLUNGSVERFAHREN DAFÜR UND VERWENDUNGEN DAVON
SEMI-CRYSTALLINE POLYAMIDE COMPOSITION HAVING A HIGH GLASS TRANSITION TEMPERATURE FOR A COMPOSITE MATERIAL, PRODUCTION METHOD THEREOF AND USES OF SAME

(30) Priorité: 11.07.2016 FR 1656626
(43) Date de publication de la demande: 30.05.2018
(73) Titulaire: Arkema France, 92700 Colombes (FR)
(72) Inventeur: CAPELOT, Mathieu, 27300 Bernay (FR); HOCHSTETTER, Gilles, 94240 L'Hay les Roses (FR)
(86) Numéro de dépôt international: PCT/FR2017/051873
(87) Numéro de publication internationale: WO 2018/011495

(56) Documents cités:
- EP-A1- 1 988 113
- EP-A1- 2 028 231
- WO-A1-2014/064375
- WO-A1-2016/102217
- WO-A1-2017/098178
- WO-A1-2017/098179
- US-A1- 2011 306 718

## Description

L'invention concerne une nouvelle composition de polyamide semi-cristallin (sc) de haute température de transition vitreuse, à base de bis(aminométhyl)cyclohexane (BAC), et de fibres de renfort longues pour matériau composite thermoplastique.

Elle concerne également le procédé de fabrication dudit matériau composite ainsi que les utilisations de la dite composition pour la fabrication de pièces mécaniques ou de structure à base dudit matériau composite pour des pièces de matériau composite ainsi que la pièce composite qui en résulte et pour des applications dans les domaines de : l'automobile, ferroviaire, marin, transport routier, de l'éolien, du sport, aéronautique et spatial, du bâtiment, des panneaux et des loisirs.

Un grand enjeu dans les matériaux composites est de trouver une résine polyamide répondant au cahier des charges suivant :
- Haute Tg pour avoir une large gamme de températures de service ;
- Une Tf la plus basse possible, pour être aisément processable, sans avoir recours à des métallurgies de moules trop spécifiques ;
- Une très bonne aptitude à la cristallisation afin de pouvoir être démoulé rapidement et ainsi être compatible avec des cycles de production intensifs, tels ceux utilisés dans l'automobile ;
- Une haute rigidité, y compris à chaud, pour pouvoir obtenir les plus hauts modules possibles du matériau final.

Le document CN104211953 décrit une composition de polyamide comprenant de 30 à 99,9% en poids d'une résine polyamide comprenant de 60 à 95% en moles de 10T, de 5 à 40% en moles de 5'T, 5' correspondant à la 2-méthyl-1,5-pentaméthylènediamine, de 0 à 70% en poids d'une charge de renfort et de 0,1 à 50% en poids d'un additif.

La résine de polyamide présente une température de fusion supérieure à 260°C.

EP 550 314 décrit, parmi ses exemples, des compositions (non réactives) de copolyamide en cherchant des températures de fusion supérieures à 250°C et des Tg limitées avec la plupart des exemples cités ayant une Tg trop basse (< 80°C) ou une Tf trop élevée (> 300°C).

EP 1 988 113 décrit une composition de moulage à base d'un copolyamide 10T/6T avec :
- 40 à 95% mol de 10T
- 5 à 40% de 6T.

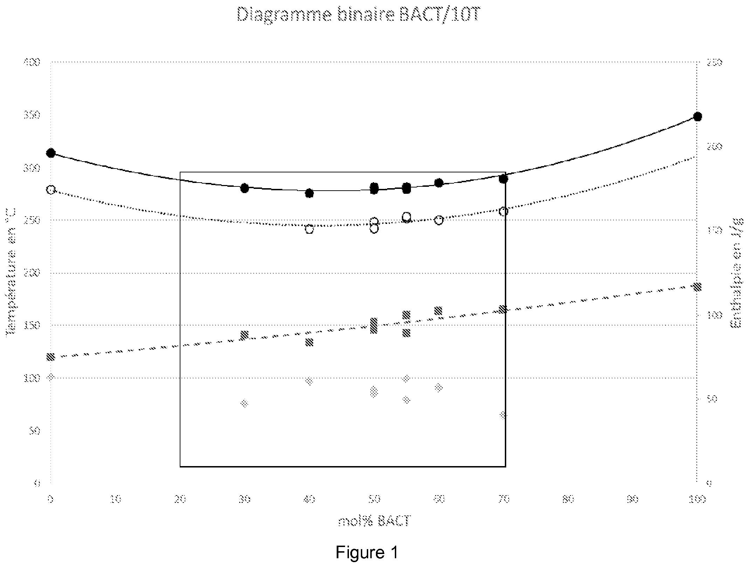

Sont visés en particulier des polyamides de température de fusion élevée et supérieure à 270°C. Les exemples mentionnés et la figure 1 nous enseignent que la température de fusion de ces compositions est d'au moins environ 280°C.

WO 2011/003973 décrit des compositions comprenant de 50 à 95 mol% d'un motif à base d'une diamine aliphatique linéaire comportant de 9 à 12 atomes de carbone et d'acide téréphtalique et de 5 à 50% de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes. Ce document ne décrit aucun allongeur non polymérique.

WO 2014/064375 décrit notamment un PA MXDT/10T qui présente un excellent compromis entre les diverses caractéristiques décrites ci-dessus. Malheureusement, le monomère m-xylène diamine (MXD) utilisé est très sujet aux réactions secondaires, donnant notamment lieu à la formation de ramifications.

Les inconvénients de l'état de l'art, avec l'absence d'un bon compromis entre les performances mécaniques et l'aptitude de mise en oeuvre (facilité de transformation) à plus basse température avec un temps de cycle de production plus court sont surmontés par la solution de la présente invention qui vise des compositions de PA semi-cristallin, présentant un excellent compromis entre des performances mécaniques élevées (tenue mécanique) en particulier à chaud et une mise en oeuvre facile. Il est en effet de haute rigidité et présente une température de transition vitreuse >120°C, une Tf < 290°C, ainsi qu'une excellente aptitude à la cristallisation (Tf-Tc <40°C), ce qui en fait une matrice de choix pour applications composites, en particulier pour l'éolien, l'automobile ou l'aéronautique.

Plus particulièrement, dans le cas des compositions réactives, on cherche à avoir une cinétique de réaction plus rapide tout en ayant une vitesse et/ou une température de cristallisation du polymère formé également plus élevée.

Le choix d'un polymère polyamide semi-cristallin, comme matrice du matériau composite de l'invention, a comme intérêt par rapport aux polyamides amorphes, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 90°C pour assurer de bonnes propriétés mécaniques au composite sur toute la plage de température d'utilisation par exemple jusqu'à 90°C pour l'éolien, jusqu'à 100°C pour l'automobile et jusqu'à 120°C pour l'aéronautique. Par contre, un point de fusion trop élevé, en particulier supérieur à 290°C, est en revanche néfaste car il nécessite la mise en oeuvre du composite à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide, avec comme conséquence l'affectation des propriétés de la matrice thermoplastique finale et du composite qui en résulte. La cristallinité dudit polymère doit être la plus élevée possible mais avec une température de fusion Tf pas trop élevée (Tf < 290°C et plus particulièrement < 280°C) pour optimiser les performances mécaniques et la vitesse de cristallisation et/ou la température de cristallisation la plus élevée possible, ceci pour réduire le temps de moulage avant éjection de la pièce composite moulée avec un choix sélectif de la composition dudit polyamide semi-cristallin.

L'objet de la présente invention est la mise en oeuvre de nouvelles compositions spécifiques de composite thermoplastique, en particulier à base de polyamide semi-cristallin, présentant un bon compromis entre des performances mécaniques élevées (tenue mécanique) en particulier à chaud et une mise en oeuvre facile. Cela signifie qu'il y a comme objectif des compositions faciles à mettre en œuvre avec des températures de transformation et de mise en oeuvre plus basses que celles pour d'autres compositions de l'état de l'art, avec un bilan énergétique global de mise en oeuvre plus favorable, un temps de cycle plus court et une productivité plus élevée. Plus particulièrement, la solution de l'invention, dans le cas de compositions réactives, permet en utilisant des compositions à base de prépolymères polyamides réactifs semi-cristallins, à la fois une cinétique de réaction et une cinétique de cristallisation rapide avec un temps de cycle plus court. Plus particulièrement, la matrice polymère polyamide tout en ayant une Tg élevée et une Tf limitée comme définies, avec une mise en oeuvre facile dudit composite, doit avoir également une vitesse de cristallisation élevée, caractérisée d'abord par un écart entre température de fusion et de cristallisation Tf-Tc ne dépassant pas 40°C, de préférence ne dépassant pas 30°C. Donc, l'objet de l'invention est de mettre au point une composition de polyamide répondant aux besoins déjà définis ci-dessus :
- Haute Tg pour avoir une large gamme de températures de service ;
- Une Tf la plus basse possible, pour être aisément processable, sans avoir recours à des métallurgies de moules trop spécifiques ;
- Une très bonne aptitude à la cristallisation afin de pouvoir être démoulé rapidement et ainsi être compatible avec des cycles de production intensifs, tels ceux utilisés dans l'automobile ;
- Une haute rigidité, y compris à chaud, pour pouvoir obtenir les plus hauts modules possibles du matériau final.

La présente invention concerne une composition pour matériau composite thermoplastique comprenant :
- 30 à 60% en volume, préférentiellement 35 à 50% en volume, d'une matrice thermoplastique comprenant de 50 à 100% en poids d'un polymère polyamide semi-cristallin et de 0 à 50% en poids d'au moins un additif et/ou d'au moins un autre polymère,
- 40 à 70% en volume, préférentiellement 50 à 65% en volume, de fibres de renfort longues (ou de renfort fibreux long),
ladite matrice thermoplastique imprégnant lesdites fibres de renfort longues (ou ledit renfort fibreux long),
ledit polymère polyamide semi-cristallin étant:
a) une composition réactive comprenant ou constitué de, au moins un prépolymère polyamide réactif précurseur dudit polymère polyamide semi-cristallin,
   ou en alternative à a),
b) une composition non réactive d'au moins un polymère polyamide, ladite composition étant celle de ladite matrice thermoplastique définie ci-dessus,
et ledit prépolymère polyamide réactif de la composition a) et ledit polymère polyamide de la composition b) comprenant ou étant constitués d'au moins un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC) et la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 20% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
- à condition que des unités BACT et XT soient toujours présentes dans ledit polymère polyamide.

Ledit polymère polyamide semi-cristallin est donc le polymère polyamide semi-cristallin qui est la base de la matrice thermoplastique, ladite matrice thermoplastique pouvant être obtenue à partir de la composition réactive a) qui correspond :
soit un prépolymère polyamide terminé di-NH₂ ou di-CO₂H qui peut réagir respectivement avec un autre prépolymère polyamide terminé di-CO₂H ou di-NH₂ pour conduire audit polymère polyamide semi-cristallin,
soit un prépolymère terminé NH₂ et CO₂H qui peut réagir avec lui-même, pour conduire audit polymère polyamide semi-cristallin,
soit un prépolymère qui peut réagir ou avec un allongeur de chaîne, pour conduire audit polymère polyamide semi-cristallin,
ou le polymère polyamide semi-cristallin est déjà présent dans la composition non réactive b).

En d'autres termes, la présente invention concerne une composition pour matériau composite thermoplastique comprenant :
- 30 à 60% en volume, préférentiellement 35 à 50% en volume, d'une matrice thermoplastique comprenant de 50 à 100% en poids d'un polymère polyamide semi-cristallin et de 0 à 50% en poids d'au moins un additif et/ou d'au moins un autre polymère,
- 40 à 70% en volume, préférentiellement 50 à 65% en volume, de fibres de renfort longues (ou de renfort fibreux long),
ladite matrice thermoplastique imprégnant lesdites fibres de renfort longues (ou ledit renfort fibreux long),
ladite matrice thermoplastique étant:
a) une composition réactive comprenant ou constitué de, au moins un prépolymère polyamide réactif précurseur dudit polymère polyamide semi-cristallin,
   ou en alternative à a),
b) une composition non réactive d'au moins un polymère polyamide, ladite composition étant celle de ladite matrice thermoplastique définie ci-dessus,
et ledit prépolymère polyamide réactif de la composition a) et ledit polymère polyamide de la composition b) comprenant ou étant constitués d'au moins un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC) et la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide.

L'expression « ledit prépolymère polyamide réactif de la composition a) et ledit polymère polyamide de la composition b) comprenant ou étant constitués d'au moins un copolyamide BACT/XT signifie que le prépolymère polyamide réactif de la composition a) ou ledit polymère polyamide de la composition b) sont constitués exclusivement d'unités à motifs amide BACT et XT dans des proportions respectives définies ci-dessus, soit le prépolymère polyamide réactif de la composition a) ou ledit polymère polyamide de la composition b) comprennent des motifs amide BACT et XT dans des proportions respectives définies ci-dessus mais également d'autre unités à motifs amide.

Avantageusement, la proportion d'unités à motifs amide la proportion de BACT/XT BACT et XT dans le prépolymère polyamide réactif de la composition a) ou ledit polymère polyamide de la composition b) est supérieure à 50%, notamment supérieure à 60%, en particulier supérieure à 70%, préférentiellement supérieure à 80%, notamment supérieure à 90%.

La présente invention concerne donc une composition pour matériau composite thermoplastique comprenant :
- 30 à 60% en volume, préférentiellement 35 à 50% en volume, d'une matrice thermoplastique comprenant de 50 à 100% en poids d'un polymère polyamide semi-cristallin et de 0 à 50% en poids d'au moins un additif et/ou d'au moins un autre polymère,
- 40 à 70% en volume, préférentiellement 50 à 65% en volume, de fibres de renfort longues (ou de renfort fibreux long),
ladite matrice thermoplastique imprégnant lesdites fibres de renfort longues (ou ledit renfort fibreux long),
ledit polymère polyamide semi-cristallin comprenant ou étant constitués d'au moins un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC) et la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide.

Ladite composition est plus particulièrement une composition pour matériau composite thermoplastique. Cela signifie qu'elle permet l'obtention d'un matériau composite thermoplastique.

Concernant les additifs, sans être limités à ceux-ci, la composition selon une variante préférée de l'invention comprend plus particulièrement, des additifs spécifiques pouvant absorber à la longueur d'onde d'un laser, comme par exemple un laser UV ou IR, ceci permettant l'utilisation de la technologie de placement automatique des fibres (AFP), dans le cas où celle-ci utilise un mode de chauffage laser, pour souder les rubans composites entre eux, ceci notamment dans le cas de rubans composites à base de fibres de verre ou de carbone. D'autres additifs comme les stabilisants thermiques peuvent être ajoutés à la composition précurseur et donc être présents dans le matériau composite thermoplastique final tel qu'utilisé dans les pièces d'application finale, en particulier ces stabilisants étant des antioxydants, contre la thermo-oxydation et/ou la photo-oxydation du polymère de la matrice thermoplastique. Lesdits antioxydants sont de type phénolique stériquement encombré et/ou amine stériquement encombrée (connues sous le nom courant HALS). Comme exemple convenable de tels additifs, on peut citer : le noir de carbone (NC) sous forme de poudre de NC ou de préférence sous forme de mélanges maîtres à base de NC et de polyéthylène (PE) ou de NC et de polyamide (PA), TiO2 (oxyde de titane), ZnO (oxyde de zinc) et dans le cas d'un laser IR, l'oxyde d'étain indium, (Indium Tin Oxide, commercialisé par Evonik) et les stabilisants thermiques tels que cités ci-haut. Comme exemple de mélange maître NC + PE avec environ 40% de NC, on peut citer l'EUTHYLEN® commercialisé par BASF. Comme exemple de mélange maître NC + PA avec environ 15% de NC, on peut citer RENOL® BLACK commercialisé par CLARIANCE.

Les additifs peuvent également être des charges qui, en plus des fibres de renfort longues, peuvent être notamment toute charge connue de l'homme du métier dans le domaine des composites. Il peut notamment s'agir de charges conductrices de la chaleur et/ou conductrices de l'électricité, telles que de la poudre de métal, du noir de carbone pulvérulent, des fibrilles de carbone, des nanotubes de carbone (NTC), de carbure de silicium, de carbonitrure de bore, de nitrure de bore ou de silicium. On pourra se reporter à ce sujet à la demande WO 2010/130930 de la Demanderesse.

Il est bien évident que les fibres de renfort longues (ou renforts fibreux longs) sont exclues des additifs.

Les additifs peuvent être aussi des agents ignifugeants, tels qu'un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique.

L'expression « autres polymères » désigne tout polymère thermoplastique et notamment un polymère polyamide, notamment un polyamide aliphatique, cycloaliphatique ou aromatique, et qui peut être microcristallin ou amorphe.

Les fibres de renfort longues (ou renfort fibreux long) peuvent être un assemblage de fibres longues, c'est-à-dire ayant un facteur de forme défini par le ratio de longueur sur diamètre de la fibre, ce qui signifie que ces fibres ont en particulier une section circulaire, supérieur à 1000, de préférence supérieur à 2000. Dans cet assemblage, les fibres peuvent être continues, sous forme de renfort unidirectionnel (UD) ou multidirectionnel (2D, 3D). En particulier, elles peuvent être sous forme de tissus, de nappes, de bandes ou de tresses et peuvent également être coupées par exemple sous forme de non tissés (mats) ou sous forme de feutres.

Dans le cas où les fibres sont aplaties, elles présentent une épaisseur et une largeur et le rapport de forme longueur et largeur L/D est alors supérieur à 1000, qu'elles soient longues ou continues.

Ces fibres de renfort longues peuvent être choisies parmi :
- les fibres minérales, celles-ci ayant des températures de fusion Tf' élevées et supérieures à la température de fusion Tf dudit polyamide semi-cristallin de l'invention et supérieures à la température de polymérisation et/ou de mise en oeuvre.
- les fibres polymériques ou de polymère ayant une température de fusion Tf' ou à défaut de Tf, une température de transition vitreuse Tg', supérieure à la température de polymérisation ou supérieure à la température de fusion Tf dudit polyamide semi-cristallin constituant ladite matrice du composite et supérieure à la température de mise en œuvre.
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al2O3) ; les fibres métallisées comme les fibres de verre métallisées et les fibres de carbone métallisées ou les mélanges des fibres précitées.

Plus particulièrement, ces fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al2O3, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
- les fibres de polymères thermodurcissables et plus particulièrement choisies parmi :
   les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde,
- les fibres de polymères thermoplastiques et plus particulièrement choisies parmi : le polyéthylène téréphtalate (PET), le polybutylène téréphtalate (PBT),
- les fibres de polyamides,
- les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
- les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort longues préférées sont des fibres longues (à section circulaire) choisies parmi les : fibres de carbone, y compris métallisées, fibres de verre, y compris métallisées de type E, R, S2, fibres d'aramides (comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

La matrice polymère de la composition de l'invention doit avoir d'abord une bonne imprégnation des fibres de renfort, c'est-à-dire que la matrice doit revêtir lesdites fibres de renfort longues et éviter ainsi la présence de microvides créés par une mauvaise imprégnation, afin de permettre la transmission aux fibres de renfort des contraintes mécaniques subies par le matériau composite avec ainsi une réponse plus performante dudit matériau composite à la sollicitation mécanique.

Les microvides créés sont susceptibles de provoquer des déficiences mécaniques, en particulier un délaminage des fibres et de fragiliser le matériau composite final.

L'expression « composition non réactive » signifie, que la composition est à base de polymère polyamide dont le poids moléculaire n'est plus susceptible d'évoluer lors de l'imprégnation des fibres de renfort longues ou après imprégnation des fibres de renfort longues et correspondant donc au polymère polyamide final de la matrice thermoplastique.

Ces polyamides selon la composition b) sont non réactifs, soit par le faible taux de fonctions (résiduelles) réactives présentes, en particulier avec un taux desdites fonctions < 120 meq/kg, soit par la présence du même type de fonctions terminales en bout de chaîne et donc non réactives entre elles, soit par la modification et blocage desdites fonctions réactives par un composant réactif monofonctionnel, par exemple pour les fonctions amines par réaction de modification avec un monoacide ou un monoisocyanate et pour des fonctions carboxyles par réaction avec une monoamine.

Avantageusement, le poids moléculaire en nombre (Mn) dudit polymère polyamide final de la matrice thermoplastique dudit matériau est de préférence dans une plage allant de 8000 à 40000 g/mol, de préférence de 10000 à 30000 g/mol tel que déterminé par le calcul à partir du taux des fonctions terminales déterminé par titration potentiométrique en solution et la fonctionnalité desdits prépolymères ou par RMN. Ces valeurs Mn peuvent correspondre à des viscosités inhérentes supérieures ou égales à 0,8, telles que déterminées selon la norme ISO 307:2007 mais en changeant le solvant (utilisation du m-crésol à la place de l'acide sulfurique et la température étant de 20°C).

A l'opposé, l'expression « composition réactive » signifie que le poids moléculaire de ladite composition réactive va évoluer après imprégnation desdites fibres de renfort longues par réaction de prépolymères réactifs entre eux par condensation, ou avec un allongeur de chaîne par polyaddition et dans ce dernier cas, sans élimination de sous-produits volatils pour conduire au polymère polyamide final de la matrice thermoplastique.

La 1,3-BAC (ou 1,3 bis(aminométhyl)cyclohexane, N° CAS : 2579-20-6) est un monomère diamine cycloaliphatique obtenu notamment par hydrogénation de la meta-xylène diamine (MXDA). La 1,3-BAC existe sous la forme de deux isomères, cis et trans, le N° CAS : 2579-20-6 correspondant à un mélange d'isomères.

La 1,4-BAC (ou 1,4 bis(aminométhyl)cyclohexane, N° CAS : 2549-07-9) est un monomère diamine cycloaliphatique obtenu notamment par hydrogénation de la para-xylène diamine (PXDA). La 1,4-BAC existe sous la forme de deux isomères, cis et trans, le N° CAS : 2549-07-9 correspondant à un mélange d'isomères.

Avantageusement, la 1,3 BAC ou la 1,4 BAC utilisée dans l'unité BACT est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Avantageusement, la proportion d'isomère trans dans la 1,4 BAC est supérieure à 60%, préférentiellement supérieure à 70%, en particulier supérieure à 80%, notamment supérieure à 90%.

BAC et/ou X peuvent être remplacés, indépendamment l'une de l'autre, jusqu'à 30% en mole par d'autres diamines ci-dessous définies, notamment par une diamine aliphatique, linéaire ou branchée, une diamine cycloaliphatique ou une diamine arylaromatique telle que la meta-xylène diamine (MXDA).

A titre d'exemple, la diamine aliphatique linéaire ou branchée est choisie parmi la 1, 4-butanediamine, la 1,5-pentanediamine, la 2-methyl-1,5-pentanediamine (MPMD), la 1,6 hexanediamine, la 1,8-octanediamine (OMDA), la 1,9-nonanediamine (NMDA), la 2-méthyl-1,8-octane-diamine (MODA), la 2,2,4-triméthylhexamethylenediamine (TMHMD), la 2,4,4-triméthylhexamethylenediamine (TMHMD), la 5-méthyl-1,9-nonanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine.

La diamine cycloaliphatique peut être choisie parmi l'isophoronediamine, la norbornanedimethylamine, la 4,4'-diaminodicyclohexylméthane (PACM), le 2,2-(4,4'-diamino-dicyclohexyl)propane (PACP), et le 3,3'-diméthyl-4,4'-diaminodicyclohexyléthane (MACM).

T peut être remplacé jusqu'à 30% en mole par d'autres diacides carboxyliques ci-dessous définies, notamment par d'autres diacides carboxyliques aromatiques, aliphatiques ou cycloaliphatiques.

Les diacides carboxyliques aromatiques peuvent être choisis parmi l'acide naphthalenedicarboxylique (NDA) et l'acide isophtalique (IPS).

Les diacides carboxyliques aliphatiques peuvent être choisis parmi l'acide adipique, l'acide subérique, l'acide azélaïque, l'acide sébacique, l'acide undécanedioïque, l'acide dodécanedioïque, l'acide brassylique, l'acide tétradecanedioïque, l'acide pentadécanedioïque, l'acide hexadécanedioiïque, l'acide octadécanedioïque et des acides gras dimérisés.

Les diacides carboxyliques cycloaliphatiques peuvent être choisis parmi l'acide cis- et/ou trans-cyclohexane-1,4-dicarboxylique et/ou l'acide cis- et/ou trans-cyclohexane-1,3-dicarboxylique (CHDA).

BAC et/ou X et/ou T peuvent être remplacés, indépendamment l'un de l'autre, jusqu'à 30% en mole par des lactames ou des acides aminocarboxyliques.

Les lactames et acides aminocarboxyliques peuvent être choisi parmi le caprolactame (CL), l'acide α,ω-aminocaproïque, l'acide α,ω-aminononanoïque, l'acide α,ω-aminoundecanoïque (AUA), le lauryllactame (LL) et l'acide α,ω-aminododécanoïque (ADA).

30% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 20% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 10% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Dans un mode de réalisation avantageux, la présente invention concerne l'une des compositions pour matériau composite n° 1 à 12 définie ci-dessous, ladite composition comprenant un polymère polyamide semi-cristallin, des fibres de renfort longues, ledit polymère polyamide semi-cristallin comprenant un copolyamide BACT/XT dans les proportions définies dans le tableau I ci-dessous :

**TableauI**

| Composition N° | Polymère polyamide semi-cristallin % en volume | Fibres de renfort longues % en volume | BACT % molaire | XT % molaire |
|---|---|---|---|---|
| 1 | 30-60 | 40-70 | 20-70 | 30-80 |
| 2 | 30-60 | 40-70 | 25-60 | 40-75 |
| 3 | 30-60 | 40-70 | 35-55 | 45-65 |
| 4 | 30-60 | 50-65 | 20-70 | 30-80 |
| 5 | 30-60 | 50-65 | 25-60 | 40-75 |
| 6 | 30-60 | 50-65 | 35-55 | 45-65 |
| 7 | 35-50 | 40-70 | 20-70 | 30-80 |
| 8 | 35-50 | 40-70 | 25-60 | 40-75 |
| 9 | 35-50 | 40-70 | 35-55 | 45-65 |
| 10 | 35-50 | 50-65 | 20-70 | 30-80 |
| 11 | 35-50 | 50-65 | 25-60 | 40-75 |
| 12 | 35-50 | 50-65 | 35-55 | 45-65 |

Avantageusement, les compositions 1 à 12 comprennent de 0 à 50% en poids d'additifs et/ou d'autres polymères.

Avantageusement, lesdites compositions sont constituées d'un polymère polyamide semi-cristallin, de fibres de renfort longues, et de 0 à 50% en poids d'additifs et/ou d'autres polymères, ledit polymère polyamide semi-cristallin comprenant un copolyamide BACT/XT dans les proportions définies dans le tableau I.

Avantageusement, lesdites compositions sont constituées d'un polymère polyamide semi-cristallin, de fibres de renfort longues, et de 0 à 50% en poids d'additifs et/ou d'autres polymères, ledit polymère polyamide semi-cristallin étant constitué d'un copolyamide BACT/XT dans les proportions définies dans le tableau I.

Avantageusement, la proportion d'additifs et/ou d'autres polymères dans les compositions définies ci-dessus est de plus de 0 à 50% en poids.

Avantageusement, dans les compositions ci-dessus définie, X est une diamine en C9, C10, C11 et C12, en particulier en C10, C11 et C12.

Les Inventeurs ont donc trouvés de manière inattendue que les compositions de l'invention présentait une meilleure aptitude à la cristallisation, un meilleur compromis haute Tg/basse Tf et surtout une plus haute enthalpie (et donc plus haut module à chaud) que les compositions de l'art antérieur.

Dans un mode de réalisation avantageux, la présente invention concerne une composition telle que définie ci-dessus, dans laquelle ledit polymère polyamide semi-cristallin présente une température de fusion Tf < 290°C, de préférence < 285°C, plus préférentiellement < 280°C, telle que déterminée selon la norme ISO 11357-3 (2013).

Dans un mode de réalisation avantageux, la présente invention concerne une composition telle que définie ci-dessus, dans laquelle ledit polymère polyamide semi-cristallin présente une température de transition vitreuse Tg > 120°C, de préférence > 130°C, plus préférentiellement > 140°C, déterminée selon la norme ISO 11357-2 :2013.

Avantageusement, la Tg est comprise de 125 à 165°C.

Dans un mode de réalisation avantageux, la présente invention concerne une composition telle que définie ci-dessus, dans laquelle ledit polymère polyamide semi-cristallin présente un écart entre la température de fusion et la température de cristallisation Tf-Tc < 40°C, préférentiellement < 30°C, déterminé selon la norme ISO 11357-3 :2013.

Dans un mode de réalisation avantageux, la présente invention concerne une composition telle que définie ci-dessus, caractérisée en ce que l'enthalpie de cristallisation du polymère polyamide semi-cristallin, mesurée en Calorimétrie Différentielle à Balayage (DSC) selon la Norme ISO 11357-3 :2013, est supérieure à 40 J/g, de préférence supérieure à 45 J/g, et encore plus préférentiellement 50J/g.

Dans un mode de réalisation avantageux, la présente invention concerne une composition telle que définie ci-dessus, caractérisée en ce que ledit polymère polyamide semi-cristallin présente une température de fusion : Tf < 290°C et une Tg >120°C.

Dans un mode de réalisation avantageux, la présente invention concerne une composition telle que définie ci-dessus, caractérisée en ce que ledit polymère polyamide semi-cristallin présente une température de fusion : Tf < 290°C et une Tg >130°C.

Dans un mode de réalisation avantageux, la présente invention concerne une composition telle que définie ci-dessus, caractérisée en ce que ledit polymère polyamide semi-cristallin présente une température de fusion : Tf < 290°C et une Tg >140°C.

Dans un mode de réalisation avantageux, la présente invention concerne une composition telle que définie ci-dessus, caractérisée en ce que ledit polymère polyamide semi-cristallin présente une température de fusion : Tf < 285°C et une Tg >120°C.

Dans un mode de réalisation avantageux, la présente invention concerne une composition telle que définie ci-dessus, caractérisée en ce que ledit polymère polyamide semi-cristallin présente une température de fusion : Tf < 285°C et une Tg >130°C.

Dans un mode de réalisation avantageux, la présente invention concerne une composition telle que définie ci-dessus, caractérisée en ce que ledit polymère polyamide semi-cristallin présente une température de fusion : Tf < 285°C et une Tg >140°C.

Dans un mode de réalisation avantageux, la présente invention concerne une composition telle que définie ci-dessus, caractérisée en ce que ledit polymère polyamide semi-cristallin présente une température de fusion : Tf < 280°C et une Tg >120°C.

Dans un mode de réalisation avantageux, la présente invention concerne une composition telle que définie ci-dessus, caractérisée en ce que ledit polymère polyamide semi-cristallin présente une température de fusion : Tf < 280°C et une Tg >130°C.

Dans un mode de réalisation avantageux, la présente invention concerne une composition telle que définie ci-dessus, caractérisée en ce que ledit polymère polyamide semi-cristallin présente une température de fusion : Tf < 280°C et une Tg >140°C.

Dans un mode de réalisation avantageux, la présente invention concerne une composition telle que définie ci-dessus, caractérisée en ce que ledit polymère polyamide semi-cristallin présente les caractéristiques suivantes (tableau II) :

**Tableau II**

| Composition N° | Compositions initiales | Tf (°C) | Tg (°C) | Tf-Tc (°C) | Delta Hc (J/g) |
|---|---|---|---|---|---|
| 13 | Compositions 1 à 12 | <290 | >120°C | | |
| 14 | Compositions 1 à 12 | <290 | >130°C | | |
| 15 | Compositions 1 à 12 | <290 | >140°C | | |
| 16 | Compositions 1 à 12 | <285 | >120°C | | |
| 17 | Compositions 1 à 12 | <285 | >130°C | | |
| 18 | Compositions 1 à 12 | <285 | >140°C | | |
| 19 | Compositions 1 à 12 | <280 | >120°C | | |
| 20 | Compositions 1 à 12 | <280 | >130°C | | |
| 21 | Compositions 1 à 12 | <280 | >140°C | | |
| 22 | Compositions 1 à 12 | <290 | >120°C | <40 | |
| 23 | Compositions 1 à 12 | <290 | >130°C | <40 | |
| 24 | Compositions 1 à 12 | <290 | >140°C | <40 | |
| 25 | Compositions 1 à 12 | <285 | >120°C | <40 | |
| 26 | Compositions 1 à 12 | <285 | >130°C | <40 | |
| 27 | Compositions 1 à 12 | <285 | >140°C | <40 | |
| 28 | Compositions 1 à 12 | <280 | >120°C | <40 | |
| 29 | Compositions 1 à 12 | <280 | >130°C | <40 | |
| 30 | Compositions 1 à 12 | <280 | >140°C | <40 | |
| 31 | Compositions 1 à 12 | <290 | >120°C | <30 | |
| 32 | Compositions 1 à 12 | <290 | >130°C | <30 | |
| 33 | Compositions 1 à 12 | <290 | >140°C | <30 | |
| 34 | Compositions 1 à 12 | <285 | >120°C | <30 | |
| 35 | Compositions 1 à 12 | <285 | >130°C | <30 | |
| 36 | Compositions 1 à 12 | <285 | >140°C | <30 | |
| 37 | Compositions 1 à 12 | <280 | >120°C | <30 | |
| 38 | Compositions 1 à 12 | <280 | >130°C | <30 | |
| 39 | Compositions 1 à 12 | <280 | >140°C | <30 | |
| 40 | Compositions 1 à 12 | <290 | >120°C | <40 | >40 |
| 41 | Compositions 1 à 12 | <290 | >130°C | <40 | >40 |
| 42 | Compositions 1 à 12 | <290 | >140°C | <40 | >40 |
| 43 | Compositions 1 à 12 | <285 | >120°C | <40 | >40 |
| 44 | Compositions 1 à 12 | <285 | >130°C | <40 | >40 |
| 45 | Compositions 1 à 12 | <285 | >140°C | <40 | >40 |
| 46 | Compositions 1 à 12 | <280 | >120°C | <40 | >40 |
| 47 | Compositions 1 à 12 | <280 | >130°C | <40 | >40 |
| 48 | Compositions 1 à 12 | <280 | >140°C | <40 | >40 |
| 49 | Compositions 1 à 12 | <290 | >120°C | <30 | >40 |
| 50 | Compositions 1 à 12 | <290 | >130°C | <30 | >40 |
| 51 | Compositions 1 à 12 | <290 | >140°C | <30 | >40 |
| 52 | Compositions 1 à 12 | <285 | >120°C | <30 | >40 |
| 53 | Compositions 1 à 12 | <285 | >130°C | <30 | >40 |
| 54 | Compositions 1 à 12 | <285 | >140°C | <30 | >40 |
| 55 | Compositions 1 à 12 | <280 | >120°C | <30 | >40 |
| 56 | Compositions 1 à 12 | <280 | >130°C | <30 | >40 |
| 57 | Compositions 1 à 12 | <280 | >140°C | <30 | >40 |
| 58 | Compositions 1 à 12 | <290 | >120°C | <40 | >45 |
| 59 | Compositions 1 à 12 | <290 | >130°C | <40 | >45 |
| 60 | Compositions 1 à 12 | <290 | >140°C | <40 | >45 |
| 61 | Compositions 1 à 12 | <285 | >120°C | <40 | >45 |
| 62 | Compositions 1 à 12 | <285 | >130°C | <40 | >45 |
| 63 | Compositions 1 à 12 | <285 | >140°C | <40 | >45 |
| 64 | Compositions 1 à 12 | <280 | >120°C | <40 | >45 |
| 65 | Compositions 1 à 12 | <280 | >130°C | <40 | >45 |
| 66 | Compositions 1 à 12 | <280 | >140°C | <40 | >45 |
| 67 | Compositions 1 à 12 | <290 | >120°C | <30 | >45 |
| 68 | Compositions 1 à 12 | <290 | >130°C | <30 | >45 |
| 69 | Compositions 1 à 12 | <290 | >140°C | <30 | >45 |
| 70 | Compositions 1 à 12 | <285 | >120°C | <30 | >45 |
| 71 | Compositions 1 à 12 | <285 | >130°C | <30 | >45 |
| 72 | Compositions 1 à 12 | <285 | >140°C | <30 | >45 |
| 73 | Compositions 1 à 12 | <280 | >120°C | <30 | >45 |
| 74 | Compositions 1 à 12 | <280 | >130°C | <30 | >45 |
| 75 | Compositions 1 à 12 | <280 | >140°C | <30 | >45 |
| 76 | Compositions 1 à 12 | <290 | >120°C | <40 | >50 |
| 77 | Compositions 1 à 12 | <290 | >130°C | <40 | >50 |
| 78 | Compositions 1 à 12 | <290 | >140°C | <40 | >50 |
| 79 | Compositions 1 à 12 | <285 | >120°C | <40 | >50 |
| 80 | Compositions 1 à 12 | <285 | >130°C | <40 | >50 |
| 81 | Compositions 1 à 12 | <285 | >140°C | <40 | >50 |
| 82 | Compositions 1 à 12 | <280 | >120°C | <40 | >50 |
| 83 | Compositions 1 à 12 | <280 | >130°C | <40 | >50 |
| 84 | Compositions 1 à 12 | <280 | >140°C | <40 | >50 |
| 85 | Compositions 1 à 12 | <290 | >120°C | <30 | >50 |
| 86 | Compositions 1 à 12 | <290 | >130°C | <30 | >50 |
| 87 | Compositions 1 à 12 | <290 | >140°C | <30 | >50 |
| 88 | Compositions 1 à 12 | <285 | >120°C | <30 | >50 |
| 89 | Compositions 1 à 12 | <285 | >130°C | <30 | >50 |
| 90 | Compositions 1 à 12 | <285 | >140°C | <30 | >50 |
| 91 | Compositions 1 à 12 | <280 | >120°C | <30 | >50 |
| 92 | Compositions 1 à 12 | <280 | >130°C | <30 | >50 |
| 93 | Compositions 1 à 12 | <280 | >140°C | <30 | >50 |

Dans un mode de réalisation avantageux, la présente invention concerne une composition telle que définie ci-dessus, caractérisée en ce que la BAC est la 1,3 BAC.

Avantageusement, la 1,3 BAC est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Dans un mode de réalisation avantageux, la présente invention concerne une composition telle que définie ci-dessus, dans laquelle la BAC est la 1,3 BAC et XT est choisi parmi 9T, 10T, 11T et 12T, plus préférentiellement 10T, 11T et 12T.

Avantageusement, XT est 10T, 10 correspondant à la 1,10 décanediamine.

Dans un mode de réalisation avantageux, la présente invention concerne une composition telle que définie ci-dessus, dans laquelle la somme des monomères qui remplacent l'acide téréphtalique, la BAC et X est égale à 0.

Il n'y a donc plus de substitution possible des monomères dans les compositions 1 à 40 telles que ci-dessus définies.

Dans un mode de réalisation avantageux, la présente invention concerne une composition telle que définie ci-dessus, caractérisée en ce que ledit polymère polyamide semi cristallin est une composition non réactive selon b).

Cela signifie que ladite composition est la même que celle du polymère (polyamide) de matrice dudit composite car il y a absence de réaction dans cette composition, laquelle reste stable et non évolutive en terme de masse moléculaire lors de son chauffage pour la mise en oeuvre du matériau composite de l'invention. Les caractéristiques du polymère polyamide dans cette composition sont les mêmes, avec Tf, Tg, Tf-Tc et Delta Hc comme définies déjà ci-haut que celles du polymère final.

Les polyamides selon b) sont obtenus par réaction classique de polycondensation à partir des composants monomères qui sont des diamines, diacides et éventuellement des aminoacides ou lactames, notamment dans le cadre de substitution des monomères.

Dans un mode de réalisation avantageux, la présente invention concerne une composition telle que définie ci-dessus, caractérisée en ce que ladite composition de polyamide est une composition réactive de prépolymère selon a) et précurseur dudit polymère polyamide de ladite matrice du composite.

Selon la composition réactive a), on peut distinguer trois possibilités détaillées ci-après :
Avantageusement, ladite composition a) comprend ou est constituée d'au moins un prépolymère réactif porteur sur la même chaîne de deux fonctions terminales X' et Y', fonctions respectivement coréactives entre elles par condensation, avec X' et Y' étant amine et carboxyle ou carboxyle et amine respectivement.

Le prépolymère est un polyamide réactif porteur sur la même chaîne (c'est-à-dire sur le même prépolymère) de deux fonctions terminales X' et Y' fonctions respectivement coréactives entre elles par condensation.

Cette réaction de condensation (ou de polycondensation) peut provoquer l'élimination de sous-produits. Ceux-ci peuvent être éliminés en travaillant de préférence selon un procédé utilisant une technologie de moule ouvert. Dans le cas d'un procédé en moule fermé, une étape de dégazage, de préférence sous vide, des sous-produits éliminés par la réaction est présente, ceci afin d'éviter la formation de microbulles des sous-produits dans le matériau composite final, qui (microbulles) peuvent affecter les performances mécaniques dudit matériau si elles ne sont pas éliminées ainsi.

Après condensation, les caractéristiques du polymère polyamide final obtenu dans cette composition sont les mêmes, avec Tf, Tg, Tf-Tc et Delta Hc comme définies déjà ci-haut.

Avantageusement, ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère, en particulier par condensation, plus particulièrement avec X' et Y' étant amine et carboxyle ou carboxyle et amine respectivement.

De la même manière, cette réaction de condensation (ou de polycondensation) peut provoquer l'élimination de sous-produits qui peuvent être éliminés comme ci-dessus défini.

Après condensation, les caractéristiques du polymère polyamide final obtenu dans cette composition sont les mêmes, avec Tf, Tg, Tf-Tc et Delta Hc comme définies déjà ci-haut.

Avantageusement, ladite composition a) ou composition précurseur, comprend ou est constituée de :
a1) au moins un prépolymère dudit polymère polyamide thermoplastique, porteur de n fonctions réactives terminales X', choisies parmi : -NH₂, -CO₂H et -OH, de préférence NH₂ et -CO₂H avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné, de structure non polymérique, porteur de 2 fonctions réactives terminales Y identiques, réactives par polyaddition avec au moins une fonction X' dudit prépolymère a1), de préférence de masse moléculaire inférieure à 500, plus préférentiellement inférieure à 400.

Comme exemples convenables d'allongeurs a2) en fonction des fonctions X' portées par ledit prépolymère polyamide semi-cristallin a1), on peut citer les suivants :
- lorsque X' est NH₂ ou OH, de préférence NH₂ :
   ○ soit l'allongeur de chaîne Y-A'-Y correspond à
      ▪ Y choisi parmi les groupements : maléimide, isocyanate éventuellement bloqué, oxazinone, oxazolinone et epoxy,
         et
      ▪ A' est un espaceur hydrocarboné comprenant optionnellement un ou plusieurs hétéroatomes, et reliant les fonctions Y entre elles, en particulier A' est un espaceur hydrocarboné ou un radical carboné portant les fonctions ou groupements réactifs Y, choisi parmi :
         - une liaison covalente entre deux fonctions (groupements) Y dans le cas où Y = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 400 g.mol⁻¹
   ∘ soit l'allongeur de chaîne Y-A'-Y correspond à Y étant un groupement caprolactame et à A' pouvant être un radical carbonyle tel que le carbonyl biscaprolactame ou à A' pouvant être un téréphtaloyle ou un isophtaloyle,
   ∘ soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
      et
- lorsque X' est COOH :
   ∘ ledit allongeur de chaîne Y-A'-Y correspond à :
      ▪ Y choisi parmi les groupements : epoxy, oxazoline, oxazine, imidazoline ou aziridine, comme le 1, 1'-iso- ou téré- phtaloyl-bis (2-methyl aziridine)
      ▪ A' étant un espaceur (radical) carboné tel que défini ci-dessus.

Plus particulièrement, quand dans ledit allongeur Y-A'-Y, ladite fonction Y est choisie parmi oxazinone, oxazolinone, oxazine, oxazoline ou imidazoline, dans ce cas, dans l'allongeur de chaîne représenté par Y-A'-Y, A' peut représenter un alkylène tel que -(CH₂)ₘ-avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en œuvre à l'état fondu.

Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X')n où X' = NH₂, les conditions préférées évitent toute formation de cycle imide lors de la polymérisation et lors la mise en oeuvre à l'état fondu.

Comme exemples d'allongeurs de chaîne à fonction réactive Y = epoxy qui conviennent qui conviennent à la mise en oeuvre de l'invention, on peut citer les diépoxydes aliphatiques, cycloaliphatiques ou aromatiques éventuellement substitués. Comme exemples de diépoxydes aliphatiques, on peut citer des diglycidyl éthers de diols aliphatiques, comme diépoxydes aromatiques des diglycidyl éthers de bisphénol A tel que le diglycidyl éther de bisphénol A (DGEBA) et comme diépoxydes cycloaliphatiques, des diglycidyl éthers de diols cycloaliphatiques ou du bisphénol A hydrogéné. De manière plus générale, comme exemples convenables de diépoxydes selon l'invention, on peut citer les bisphenol A diglycidyl éther (DGEBA) et son dérivé hydrogéné (cycloaliphatique), bisphénol F diglycidyl éther, le tétrabromo bisphénol A diglycidyl éther ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn < 500, polypropylène glycol diglycidyl éther de Mn < 500, polytétraméthylène glycol diglycidyl éther de Mn < 500, résorcinol diglycidyl éther, néopentylglycol diglycidyl éther, bisphenol A polyéthylène glycol diglycidyl éther de Mn <500, bisphénol A polypropylèneglycol diglycidyl éther de Mn < 500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2 cyclohexane dicarboxylate et les mélanges des diépoxydes cités.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis- (benzoxazinone), bisoxazinone et bisoxazolinone. A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téréphtaloyle) avec comme exemple d'allongeur de ce type, la 1, 1' isophtaloyl-bis(2-méthyl aziridine).

La présence d'un catalyseur de la réaction entre ledit prépolymère P(X')n et ledit allongeur Y-A'-Y à un taux allant de 0,001 à 2%, de préférence de 0,01 à 0,5% par rapport au poids total de deux co-réactants cités peut accélérer la réaction de (poly)addition et ainsi raccourcir le cycle de production.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure ou égale à 500, plus préférentiellement inférieure ou égale à 400.

Lesdits prépolymères réactifs de ladite composition réactive a), selon les trois options citées plus haut, ont une masse moléculaire moyenne en nombre Mn allant de 500 à 10000, de préférence de 1000 à 6000. Toutes les masses Mn sont déterminées par potentiométrie ou par RMN (Postma et al. (Polymer, 47, 1899-1911 (2006)).

Dans le cas des compositions réactives de l'invention selon définition a), lesdits prépolymères réactifs sont préparés par réaction classique de polycondensation entre les composants diamines et diacides correspondants et éventuellement (en fonction des substitutions) aminoacides ou lactames. Les prépolymères portant des fonctions X' et Y' amine et carboxyle sur la même chaîne peuvent être obtenus par exemple en ajoutant une combinaison de monomères (aminoacide, diamine, diacide) présentant au total une quantité égale de motifs amine et carboxyle, mais en ne conduisant pas la réaction jusqu'à conversion totale. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxyle, avec un taux molaire global en fonctions acides égal à celui des fonctions amines X' de départ.

Pour l'obtention de prépolymères fonctionnalisés avec des fonctions identiques (amines ou carboxyle) sur la même chaîne, il suffit d'avoir un excès de diamine (ou de fonctions amines globalement) pour avoir des fonctions terminales amines ou excès de diacide (ou de fonctions carboxyle globalement) pour avoir des fonctions terminales carboxyles.

Dans le cas d'un prépolymère P(X')n avec n fonctions X' identiques, la fonctionnalité 1 peut être obtenue en présence d'un composant monofonctionnel bloquant (monoacide ou monoamine en fonction de la nature de X = amine ou carboxyle).

Une fonctionnalité n = 2 peut être obtenue à partir de composants difonctionnels : diamines et diacides avec excès de l'un pour fixer X en fonction de cet excès.

Pour n = 3 par exemple, pour un prépolymère P(X')n, il faut la présence d'un composant trifonctionnel, par exemple présence d'une triamine (une mole par chaîne de prépolymère) avec une diamine dans la réaction avec un diacide. La fonctionnalité préférée pour P(X')n est n = 2.

Dans un mode de réalisation avantageux, la présente invention concerne une composition telle que définie ci-dessus, ladite composition a) ou composition précurseur, comprenant ou étant constituée de :
a1) au moins un prépolymère dudit polymère polyamide thermoplastique, porteur de n fonctions réactives terminales X', et
a2) au moins un allongeur de chaîne Y-A'-Y,
dans laquelle X' est NH₂ ou OH, en particulier NH₂ et Y est choisi parmi un anhydride, en particulier le dianhydride 3,3',4,4'-benzophénone tétracarboxylique, une oxazinone, une oxazolinone et un époxy

Dans un mode de réalisation avantageux, la présente invention concerne une composition telle que définie ci-dessus, ladite composition a) ou composition précurseur, comprenant ou étant constituée de :
a1) au moins un prépolymère dudit polymère polyamide thermoplastique, porteur de n fonctions réactives terminales X', et
a2) au moins un allongeur de chaîne Y-A'-Y,
dans laquelle X' est CO₂H et Y est choisi parmi un epoxy et une oxazoline.

Avantageusement, X' est CO₂H et Y-A'-Y est choisi parmi les phénylènes bis oxazolines, de préférence la 1,3 - phénylène-bis(2-oxazoline) ou la 1,4-phénylène-bis(2-oxazoline) (PBO).

Dans un mode de réalisation avantageux, la présente invention concerne une composition telle que définie ci-dessus, caractérisée en ce que caractérisée en ce que elle comprend a1) au moins un prépolymère aminé (porteur de -NH2), dudit polymère polyamide semi-crsitallinde la matrice thermoplastique, en particulier avec au moins 50% et plus particulièrement avec 100% des groupements terminaux dudit prépolymère a1) étant des fonctions d'amine primaire -NH2 et a2) au moins un allongeur de chaîne, non polymérique et porteur d'un groupement anhydride carboxylique cyclique, de préférence porté par un cycle aromatique, ayant comme substituant un groupement comprenant une insaturation éthylénique ou acétylénique, de préférence acétylénique, ledit groupement anhydride carboxylique pouvant être sous forme acide, ester, amide ou imide avec ledit allongeur a2) étant présent à un taux correspondant à un rapport molaire a2)/(-NH2) inférieur à 0,36, de préférence allant de 0,1 à 0,35, plus préférentiellement allant de 0,15 à 0,35 et encore plus préférentiellement allant de 0,15 à 0,31 et en ce que ledit polymère thermoplastique de la matrice est le produit de la réaction de polymérisation par allongement dudit prépolymère a1) par ledit allongeur a2).

Ladite réaction par le choix des composants a1) et a2) et de leur rapport molaire spécifique conduit à un polymère final thermoplastique qui n'est pas réticulé.

Ledit prépolymère a1) est porteur de groupements amine primaire représenté par -NH2. Plus particulièrement, il faut noter que le nombre moyen de groupements amine primaire par molécule de prépolymère a1), autrement dit la fonctionnalité moyenne en groupements amine primaire, peut varier de 1 à 3 et de préférence de 1 à 2. En particulier, la fonctionnalité dudit prépolymère a1) d'au moins 50% des groupements terminaux dudit prépolymère a1) étant des fonctions d'amine primaire -NH2, cela signifie qu'il est possible qu'une partie soit des groupements carboxyle ou des bouts de chaîne bloqués sans groupement réactif et dans ce cas, la fonctionnalité moyenne en -NH2 peut ainsi varier de 1 à 3 et de préférence de 1 à 2.

Le terme « thermoplastique » dans le cas de la présente invention signifie que le polymère résultant de la réaction du prépolymère a1) et de l'allongeur a2) est essentiellement thermoplastique, ce qui veut dire qu'il contient moins de 15% de son poids, de préférence moins de 10% de son poids et plus préférentiellement moins de 5% de son poids et encore plus préférentiellement 0% de son poids (à 0,5% près ou à 1% près) de polymères réticulés qui sont insolubles ou infusibles.

Ledit allongeur a2) peut être choisi parmi :
- les anhydrides et dérivés d'anhydride sous forme acide, ester, amide ou imide des éthynyl o-phtalique, méthyl éthynyl o-phtalique, phényl éthynyl o-phtalique, naphtyl éthynyl o-phtalique, 4-(o-phtaloyl éthynyl) o-phtalique ou le 4-(phényl éthynyl cétone) o-phtalique, ce dernier étant aussi appelé 4-(phényl éthynyl) trimellitique,
- les acides ou esters ou amides des acides éthynyl isophtalique, méthyl éthynyl isophtalique, phényl éthynyl isophtalique, naphtyl éthynyl isophtalique, 4-(o-phtaloyl éthynyl) isophtalique, 4-(phényl éthynyl cétone) isophtalique, éthynyl téréphtalique, méthyl éthynyl téréphtalique, phényl éthynyl téréphtalique, naphtyl éthynyl téréphtalique, 4-(o-phtaloyl éthynyl) téréphtalique, éthynyl benzoïque, méthyl éthynyl benzoïque, phényl éthynyl benzoïque, naphtyl éthynyl benzoïque, 4-(o-phtaloyl éthynyl) benzoïque.

Avantageusement, ledit allongeur a2) est choisi parmi les composés anhydrides aromatiques, de préférence o-phtaliques, substitués en position 4 du cycle aromatique par un substituant défini par un groupement R-C=C-(R')x- avec R étant un alkyl en C1-C2 ou H ou aryle, en particulier phényle ou R est le résidu d'un anhydride carboxylique aromatique, de préférence o-phtalique, lié à la triple liaison acétylénique par le carbone en position 4 du cycle aromatique et x étant égal à 0 ou à 1 et pour x étant égal à 1, R' étant un groupement carbonyle.

Avantageusement, ledit allongeur a2) est choisi parmi les composés anhydrides aromatiques o-phtaliques porteurs en position 4 d'un groupement substituant choisi parmi méthyl éthynyle, phényl éthynyle, 4-(o-phtaloyle) éthynyle, phényl éthynyl cétone aussi appelé anhydride phényl éthynyl trimellitique et de préférence porteurs en position 4 d'un groupement substituant choisi parmi méthyl éthynyle et phényl éthynyl cétone.

Avantageusement, ledit allongeur a2), tel que défini ci-dessus et quelle que soit sa structure, a un poids moléculaire inférieur ou égal à 500, de préférence inférieur ou égal à 400.

Avantageusement, le taux dudit allongeur a2), tel que défini ci-dessus et quelle que soit sa structure, dans le dit polymère polyamide varie de 1 à 20%, en particulier de 5 à 20%.

Dans un mode de réalisation avantageux, la présente invention concerne une composition telle que définie ci-dessus, caractérisée en ce que les fibres de renfort longues sont en particulier à section circulaire avec L/D > 1000, de préférence > 2000 et plus particulièrement sélectionnées parmi les fibres de verre, de carbone, de céramique, d'aramide ou leurs mélanges.

Préférentiellement, ces fibres ont une section circulaire.

L'assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m², de préférence de 200 à 700g/m². Les fibres de renfort longues peuvent être sous forme tissée ou non tissée, en particulier sous forme de tissus et d'étoffes de renfort. Elles peuvent en particulier être assemblées et liées sous forme de préforme ayant déjà la forme de la pièce finale. Comme liant convenable, on peut utiliser une composition selon a) ou b) et à défaut un liant compatible avec celle-ci (composition a) ou b)).

Dans un mode de réalisation avantageux, la présente invention concerne une composition telle que définie ci-dessus, caractérisée en ce qu'il s'agit d'une composition de moulage.

Selon un autre aspect, la présente invention concerne un procédé de fabrication d'un matériau composite thermoplastique, en particulier d'une pièce mécanique ou d'une pièce de structure à base dudit matériau, de composition telle que définie ci-dessus, caractérisé en ce qu'il comprend au moins une étape de polymérisation d'au moins une composition réactive a) telle que définie ci-dessus ou une étape de moulage ou de mise en oeuvre d'au moins une composition non réactive b), telle que définie ci-dessus.

Dans un mode de réalisation avantageux, la présente invention concerne un procédé de fabrication d'un matériau composite thermoplastique tel que défini ci-dessus, caractérisé en ce qu'il comprend les étapes suivantes :
i) imprégnation à l'état fondu d'un renfort fibreux long par une composition telle que définie ci-dessus mais ne comprenant pas ledit renfort fibreux long dans un moule ouvert ou fermé ou hors moule, afin d'obtenir une composition telle que définie ci-dessus,
ii) réaction de polymérisation dans le cas d'une composition réactive a) de polyamide tel que défini ci-dessus, par chauffage de ladite composition de l'étape i) avec allongement de chaîne, suivant le cas, par réaction de polycondensation ou par réaction de polyaddition, en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en oeuvre ou moulage de ladite composition de l'étape i) dans le cas d'une composition de polyamide non réactive b) pour former la pièce composite finale dans un moule ou avec un autre système de mise en œuvre et, dans le cas d'une composition réactive a), une étape de mise en oeuvre par moulage ou par un autre système de mise en œuvre et simultanément avec l'étape ii) de polymérisation.

Dans le procédé de l'invention, ladite mise en œuvre peut être réalisée de préférence selon un procédé RTM, C-RTM, S-RIM, injection-compression, pultrusion ou par infusion, en particulier dans le cas d'une composition réactive a).

Selon un autre aspect, la présente invention concerne un polymère polyamide semi-cristallin, caractérisé en ce qu'il correspond au (ou est le) polymère de la matrice thermoplastique dudit matériau composite thermoplastique, tel que défini ci-dessus, ledit polymère étant un polymère non réactif tel que défini selon ladite composition b) ou un polymère susceptible d'être obtenu à partir d'une composition réactive telle que définie selon ladite composition a).

Ce polymère thermoplastique est par définition un des composants essentiels de la composition du matériau composite thermoplastique de la présente invention et fait donc partie de l'invention comme produit lié à la présente invention avec le même concept inventif commun face au même problème technique à résoudre. L'invention couvre donc également l'utilisation dudit polymère thermoplastique selon l'invention en tant que matrice thermoplastique d'un composite thermoplastique à base d'un renfort fibreux comme décrit ci-haut.

Selon encore un autre aspect, la présente invention concerne l'utilisation d'une composition telle que définie ci-dessus ou d'un polymère tel que défini ci-dessus, pour la fabrication de pièces mécaniques ou de structure à base dudit matériau composite.

Dans un mode de réalisation avantageux, la présente invention concerne l'utilisation telle que définie ci-dessus, caractérisée en ce que lesdites pièces mécaniques ou de structure dudit matériau composite concernent des applications dans le domaine de l'automobile, ferroviaire, marin (maritime), de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

Avantageusement, lesdites applications sont dans le domaine de l'éolien et ladite Tg dudit polyamide est supérieure à 120°C, de préférence supérieure à 130°C, plus préférentiellement supérieure à 140°C.

Avantageusement, lesdites applications sont dans le domaine de l'automobile et ladite Tg dudit polyamide est est supérieure à 120°C, de préférence supérieure à 130°C, plus préférentiellement supérieure à 140°C.

Avantageusement, lesdites applications sont dans le domaine de l'aéronautique et ladite Tg dudit polyamide est supérieure à 120°C, de préférence supérieure à 130°C, plus préférentiellement supérieure à 140°C.

Selon un autre aspect, la présente invention concerne un matériau composite thermoplastique caractérisé en ce qu'il résulte de l'utilisation d'au moins une composition pour matériau composite thermoplastique telle que définie ci-dessus.

Ledit matériau composite thermoplastique comprend donc une matrice thermoplastique à base d'un polymère polyamide semi-cristallin tel que défini ci-dessus.

Selon encore un autre aspect, la présente invention concerne une pièce mécanique ou de structure de matériau composite thermoplastique, caractérisée en ce qu'elle résulte de l'utilisation d'au moins une composition telle que définie ci-dessus ou de l'utilisation d'un polymère polyamide tel que défini ci-dessus ou qu'elle est à base d'un matériau composite tel que défini ci-dessus ou qu'elle est obtenue par un procédé tel que défini ci-dessus.

La pièce mécanique ou de structure de matériau composite thermoplastique comprend donc une matrice thermoplastique à base d'un polymère polyamide semi-cristallin tel que défini ci-dessus ou qu'elle est à base d'un matériau composite tel que défini ci-dessus ou qu'elle est obtenue par un procédé tel que défini ci-dessus.

Avantageusement, ladite pièce de structure définie ci-dessus, est une pièce automobile post-traitée par cataphorèse.

Avantageusement, ladite pièce de structure définie ci-dessus, est une pièce pour éolienne.

Avantageusement, ladite pièce de structure définie ci-dessus, est une pièce pour l'aéronautique.

### Méthodes de détermination des caractéristiques citées

- La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place de l'acide sulfurique et la température étant de 20°C).
- La température de transition vitreuse Tg est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3 :2013.
- Le module E' à 180°C est obtenu à partir de courbes d'analyse mécanique dynamique (DMA) réalisée sur des barreaux en mode tension, en utilisant une rampe de 2°C/min, une fréquence de 1Hz et une amplitude de 10µm.
- La Mn du prépolymère est déterminée à partir de la titration (dosage) des fonctions terminales COOH ou NH2 selon une méthode potentiométrique et à partir d'une fonctionnalité théorique de 2.

### Description des figures :

La figure 1 présente les courbes de Tf, Tg, Tc et Delta Hc obtenues en fonction du pourcentage molaire de BACT dans un copolyamide BACT/10T.

Les courbes représentent :
Ronds pleins :Tf.
Ronds vides :Tc.
Carrés : Tg
Losanges : Enthalpie de cristallisation.

### Exemples

### A - Préparation d'un polymère polyamide par voie directe (sans allongement de chaîne)

Le mode opératoire suivant est un exemple de procédé de préparation, et n'est pas limitatif. Il est représentatif de toutes les compositions selon l'invention :
Dans un réacteur autoclave de 14 litres, on introduit 5 kg des matières premières suivantes :
- 500 g d'eau,
- les diamines,
- l'aminoacide (éventuellement),
- l'acide térépthalique et éventuellement un ou des autres diacides,
- le régulateur de chaîne monofonctionnel : acide benzoïque en quantité adaptée à la Mn visée et variant (acide benzoïque) de 50 à 100 g,
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau III ci-dessous.

Le réacteur fermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

La polymérisation est ensuite poursuivie sous balayage d'azote de 20 I/h jusqu'à obtention de la viscosité indiquée au tableau de caractéristiques.

Le polymère est ensuite vidangé par la vanne de fond puis refroidi dans un bac d'eau puis mis sous forme de granulés.

Les résultats sont présentés dans les tableaux III-VI suivant. Ceux-ci ont été obtenus à partir de 1,3 BAC présentant un ratio cis/trans de 75/25 mol%.

**TABLEAU III**

| **Réf** | **10T** | **BACT** | **Tf** | **Tc** | **Tf-Tc** | **DeltaHc** | **Tg** | **Viscosité inhérente** | **E' 180°C** |
|---|---|---|---|---|---|---|---|---|---|
| | **mol%** | **mol%** | **°C** | **°C** | **°C** | **J/g** | **°C** | **-** | **MPa** |
| C 10T* | 100,0 | 0,0 | 314 | 279 | 35 | 63 | 120 | insoluble | - |
| 11 | 60,0 | 40,0 | 275,6 | 241,7 | 33,9 | 60,8 | 134,0 | 0,92 | - |
| 12 | 50,0 | 50,0 | 281,7 | 248,3 | 33,4 | 53,5 | 153,4 | 1,05 | 805,3 |
| 13 | 50,0 | 50,0 | 279,4 | 242,5 | 36,9 | 55,5 | 146,0 | 0,93 | - |
| 14 | 45,0 | 55,0 | 279,8 | 252,0 | 27,8 | 62,2 | 142,7 | 0,87 | - |
| 15 | 45,0 | 55,0 | 282,0 | 253,5 | 28,5 | 49,7 | 160,2 | 1,09 | - |
| 16 | 40,0 | 60,0 | 286,1 | 250,4 | 35,7 | 57,0 | 163,9 | 0,94 | 886 |
| 17 | 30,0 | 70,0 | 289,7 | 258,6 | 31,1 | 40,6 | 165,6 | 0,86 | - |
| C BACT* | 0,0 | 100,0 | 349 | - | - | - | 187 | - | - |

| | | | | | | | | | |
|---|---|---|---|---|---|---|---|---|---|
| C désigne Comparatif I désigne Invention * Selon JP2015017177 | | | | | | | | | |

Les résultats du Tableau III montrent que pour une fraction molaire de BACT de 20 (non indiqué sur le tableau) à 70 mol% (de préférence de 25 à 60 mol%), la température de fusion est inférieure à 290°C (de préférence inférieure à 280°C).

Dans le même temps, la Tg est très élevée et peut être modulée de 125°C (non indiquée sur le tableau) à environ 165°C. L'enthalpie de cristallisation pour tous ces produits est particulièrement élevée, et notamment supérieure à 50J/g (notamment supérieure au MXDT/10T décrit dans WO 2014/064375).

**TABLEAU IV**

| **Réf** | **10T** | **BACT** | **11** | **Tf** | **Tc** | **Tf-Tc** | **DeltaHc** | **Tg** | **Viscosité inherente** |
|---|---|---|---|---|---|---|---|---|---|
| | **mol%** | **mol%** | **mol%** | **°C** | **°C** | **°C** | **J/g** | **°C** | **-** |
| I8 | 41,5 | 50,8 | 7,7 | 269,2 | 232,4 | 36,8 | 41,4 | 149,5 | 1,14 |
| I9 | 38,2 | 46,9 | 14,9 | 256,1 | 189,7 | 66,4 | 28,7 | 144,9 | 1,22 |

La substitution partielle de l'un des deux motifs avec l'acide 11-aminoundécanoïque est également possible et donne de bons résultats pour avoir un bon compromis Tf/Tg (Tableau IV).

**TABLEAU V**

| **Réf** | **10T** | **BACT** | **6T** | **Tf** | **Tc** | **Tf-Tc** | **DeltaHc** | **Tg** | **Viscosité in herente** |
|---|---|---|---|---|---|---|---|---|---|
| | **mol%** | **mol%** | **mol%** | **°C** | **°C** | **°C** | **J/g** | **°C** | **-** |
| I10 | 42,5 | 51,9 | 5,5 | 270,9 | 234,0 | 36,9 | 49,7 | 161,3 | 1,02 |
| I11 | 40,5 | 49,5 | 10 | 263,9 | 233,2 | 30,7 | 44,5 | 143,2 | 0,86 |

La substitution partielle de l'un des deux motifs avec le motif 6T est également possible et donne de bons résultats pour avoir un bon compromis Tf/Tg (Tableau V).

**TABLEAU VI**

| Réf. | Type essai | Structure moléculaire / Composition molaire | Tf | Te | Tf-Tc | DeltaHc | Tg | Viscosité inhérente |
|---|---|---|---|---|---|---|---|---|
| | | | °C | °C | °C | J/g | °C | |
| C1 | Comparatif, (EP1988113) | 10T/6T (59/41) | 281 | 236 | **45** | 44 | 122 | 1,12 |
| C2 | Comparatif, (EP1988113) | 10T/6T/11 (60/24/16) | 269 | 220 | **49** | **39** | **111** | 1,25 |
| C3 | Comparatif, (WO2011/00393) | 10T/TMDT (59/41) | 263 | 197 | **66** | **35** | 133 | 1,15 |
| C10T | Comparatif | 10T (100) | **314** | 279 | 35 | 63 | 120 | insoluble |
| C4 | Comparatif | 10T/11 (67/33) | 269 | 232 | **37** | 50 | **84** | 1,19 |
| C5 | Comparatif | 10,T/11 (59/41) | 261 | 213 | **48** | **39** | **78** | 1,15 |
| C6 | Comparatif | 10T/10I (67/33) | 269 | 205 | **64** | **32** | **110** | 1,12 |
| C7 | Comparatif | MXDT/11 (59/41) | 211 | (*) | **> 100** | **12** | **111** | 1,25 |
| C8 | Comparatif | MPMDT/11 (59/41) | - | (*) | - | - | **84** | 1,14 |
| C9 | Comparatif (WO2014/064375) | 10T/MXDT (50/50) | 262 | 211 | **51** | **17** | 137 | 0,99 |
| C10 | Comparatif (WO2014/064375) | 10T/MPMDT (59/41) | 264 | 219 | **45** | 40 | 126 | 1,11 |
| C11 | Comparatif | 10T/MPMDT (50/50) | 245 | 185 | **60** | **22** | 127 | 1,12 |
| C12 | Comparatif (WO2014/064375) | 10T/12T/11 (60/24/16) | 271 | 246 | 25 | 56 | **105** | 0,98 |
| C13 | Comparatif (WO2014/064375) | 18T/MXDT (71/29) | 264 | 242 | 22 | 47 | **95** | 0,86 |

| | | | | | | | | |
|---|---|---|---|---|---|---|---|---|
| (*) : Pas de cristallisation au refroidissement. | | | | | | | | |

### B - Préparation d'un polymère polyamide par allongement de chaîne d'un prépolymère (ou oligomère) réactif

### B-1 Préparation de prépolymères réactifs de type P(X')n (ou P(Y')n)

Le mode opératoire suivant est un exemple de procédé de préparation, et n'est pas limitatif.

Il est représentatif de toutes les compositions selon l'invention :
Dans un réacteur autoclave de 14 litres, on introduit 5 kg des matières premières suivantes :
- 500 g d'eau,
- les diamines,
- l'aminoacide (éventuellement),
- l'acide térépthalique et éventuellement un ou des autres diacides,
- 35 g d'hypophosphite de sodium en solution,
- 0,1 g d'un antimousse WACKER AK1000 (société Wacker Silicones).

Le réacteurfermé est purgé de son oxygène résiduel puis chauffé à une température de 230°C de la matière. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

L'oligomère (prépolymère) est ensuite vidangé par la vanne de fond puis refroidi dans un bac d'eau puis broyé.

La nature et rapports molaires des motifs et structures moléculaires des polyamides (par essai référencé) sont donnés au tableau VII ci-dessous. Ceux-ci ont été obtenus à partir de 1,3 BAC présentant un ratio cis/trans de 75/25 mol%.

**TABLEAU VII**

| **Réf.** | **Structure moléculaire et composition chimique (mol%)** | **Tf** | **Tc** | **Tf-Tc** | **DeltaHc** | **Tg** | **Viscosité inhérente** | **Indice d'acide** | **Indice d'amine** | **Mn**** |
|---|---|---|---|---|---|---|---|---|---|---|
| | | **°C** | **°C** | **°C** | **J/g** | **°C** | - | **meg/kg*** | **meg/kg*** | **g/mol** |
| P1 | 1,3BACT/10T (40/60) | 259,2 | 217 | | 45,0 | 121,0 | 0,35 | 713 | 56 | 2601 |
| P2 | 1,3BACT/10T (40/60) | 265,7 | 230,6 | | 58,6 | 104,6 | 0,42 | 0 | 639 | 3129 |

| | | | | | | | | | | |
|---|---|---|---|---|---|---|---|---|---|---|
| (*) : Milliéquivalents par kilogramme (**) Mn potentiométrique | | | | | | | | | | |

### B-2 Préparation du polymère polyamide par réaction entre prépolymère P(X')n et P(Y')n

Un mélange stœchiométrique (mol(acide) = mol(amine)) des deux oligomères P1 (X' = COOH) et P2 (Y' = NH2) ci-dessus séchés et broyés est introduit sous balayage d'azote dans une micro-extrudeuse de marque DSM (de volume 15mL) à vis coniques corotatives préchauffée à 280°C sous rotation des vis à 100 tr/mn. Le mélange est laissé sous recirculation dans la micro-extrudeuse et l'augmentation de la viscosité est suivie par mesure de la force normale. Au bout de 15 minutes environ, le contenu de la micro-extrudeuse est vidangé sous forme d'un jonc. Le produit refroidi à l'air est mis sous forme de granulés.

Le produit I12 obtenu présente une viscosité inhérente égale à 1,92.

### B-3 Préparation du polymère polyamide par réaction entre prépolymère P(X')n et un allongeur Y-A'-Y

10 g de l'oligomère P1 ci-dessus séché et broyé, sont mélangés avec une quantité stœchiométrique de 1,3 phénylène bis-oxazoline (PBO). Le mélange est introduit sous balayage d'azote dans une micro-extrudeuse de marque DSM (de volume 15mL) à vis coniques corotatives préchauffée à 280°C sous rotation des vis à 100 tr/mn. Le mélange est laissé sous recirculation dans la micro-extrudeuse et l'augmentation de la viscosité est suivie par mesure de la force normale. Au bout de 2 minutes environ, un palier est atteint et le contenu de la micro-extrudeuse est vidangé sous forme d'un jonc. Le produit refroidi à l'air est mis sous forme de granulés.

Le produit I13 obtenu présente une viscosité inhérente égale à 0,97.

## Revendications

1. Composition pour matériau composite thermoplastique comprenant :
- 30 à 60% en volume, préférentiellement 35 à 50% en volume, d'une matrice thermoplastique comprenant de 50 à 100% en poids d'un polymère polyamide semi-cristallin et de 0 à 50% en poids d'au moins un additif et/ou d'au moins un autre polymère,
- 40 à 70% en volume, préférentiellement 50 à 65% en volume, de fibres de renfort longues (ou de renfort fibreux long) présentant un ratio longueur sur diamètre de la fibre supérieur à 1000,
ladite matrice thermoplastique imprégnant lesdites fibres de renfort longues (ou ledit renfort fibreux long),
ladite matrice thermoplastique étant:
a) une composition réactive comprenant ou constitué de, au moins un prépolymère polyamide réactif précurseur dudit polymère polyamide semi-cristallin,
ou en alternative à a),
b) une composition non réactive d'au moins un polymère polyamide, ladite composition étant celle de ladite matrice thermoplastique définie ci-dessus,
et ledit prépolymère polyamide réactif de la composition a) et ledit polymère polyamide de la composition b) comprenant ou étant constitués d'au moins un copolyamide BACT/XT dans lequel :
- BACT est une unité à motif amide présente à un taux molaire allant de 20 à 70%, de préférence de 25 à 60%, plus préférentiellement de 35 à 55%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 30 à 80%, de préférence de 40 à 75%, plus préférentiellement de 45 à 65%, où X est une diamine aliphatique linéaire en C9 à C18, de préférence en C9, C10, C11 et C12, et où T est l'acide téréphtalique, préférentiellement en C10, C11 et C12,
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 10% en mole, par rapport à la quantité totale des monomères utilisés dans le copolyamide, et
- à condition que des unités BACT et XT soient toujours présentes dans ledit polymère polyamide.

2. Composition selon la revendication 1, dans laquelle ledit polymère polyamide semi-cristallin présente une température de fusion Tf < 290°C, de préférence < 285°C, plus préférentiellement < 280°C, telle que déterminée selon la norme ISO 11357-3 (2013).

3. Composition selon la revendication 1 ou 2, dans laquelle ledit polymère polyamide semi-cristallin présente une température de transition vitreuse Tg > 120°C, de préférence > 130°C, plus préférentiellement > 140°C, déterminée selon la norme ISO 11357-2 :2013.

4. Composition selon l'une des revendications 1 à 3, dans laquelle ledit polymère polyamide semi-cristallin présente un écart entre la température de fusion et la température de cristallisation Tf-Tc < 40°C, préférentiellement < 30°C, déterminé selon la norme ISO 11357-3 :2013.

5. Composition selon l'une des revendications 1 à 4, **caractérisée en ce que** l'enthalpie de cristallisation du polymère polyamide semi-cristallin, mesurée en Calorimétrie Différentielle à Balayage (DSC) selon la Norme ISO 11357-3 :2013, est supérieure à 40 J/g, de préférence supérieure à 45 J/g, plus préférentiellement supérieure à 50 J/g.

6. Composition selon l'une des revendications 1 à 5, dans laquelle la BAC est la 1,3 BAC.

7. Composition selon l'une des revendications 1 à 6, dans laquelle la BAC est la 1,3 BAC et XT est choisi parmi 9T, 10T, 11T et 12T, plus préférentiellement 10T, 11T et 12T.

8. Composition selon l'une des revendications 1 à 7, dans laquelle XT est 10T, 10 correspondant à la 1,10 décanediamine.

9. Composition selon l'une des revendications 1 à 8, dans laquelle la somme des monomères qui remplacent l'acide téréphtalique, la BAC et X est égale à 0.

10. Composition selon l'une des revendications 1 à 9, **caractérisée en ce que** ladite matrice thermoplastique est une composition non réactive selon b).

11. Composition selon l'une des revendications 1 à 9, **caractérisée en ce que** ladite matrice thermoplastique est une composition réactive de prépolymère selon a) et précurseur dudit polymère polyamide de ladite matrice du composite.

12. Composition selon la revendication 11, **caractérisée en ce que** ladite composition a) comprend ou est constituée d'au moins un prépolymère réactif porteur sur la même chaîne de deux fonctions terminales X' et Y', fonctions respectivement coréactives entre elles par condensation, avec X' et Y' étant amine et carboxyle ou carboxyle et amine respectivement.

13. Composition selon la revendication 11, **caractérisée en ce que** ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère, en particulier par condensation, plus particulièrement avec X' et Y' étant amine et carboxyle ou carboxyle et amine respectivement.

14. Composition selon la revendication 11, **caractérisée en ce que** ladite composition a) ou composition précurseur, comprend ou est constituée de :
a1) au moins un prépolymère dudit polymère polyamide thermoplastique, porteur de n fonctions réactives terminales X', choisies parmi : -NH₂, -CO₂H et -OH, de préférence NH₂ et -CO₂H avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné, de structure non polymérique, porteur de 2 fonctions réactives terminales Y identiques, réactives par polyaddition avec au moins une fonction X' dudit prépolymère a1), de préférence de masse moléculaire inférieure ou égale à 500, plus préférentiellement inférieure ou égale à 400.

15. Composition selon l'une des revendications 11 à 14, **caractérisée en ce que** lesdits prépolymères réactifs de ladite composition a) ont une masse moléculaire moyenne en nombre Mn allant de 500 à 10000, de préférence de 1000 à 6000.

16. Composition selon l'une des revendications 14 ou 15, dans laquelle X' est NH₂ ou OH, en particulier NH₂ et Y est choisi parmi un anhydride, un maléimide, un isocyanate éventuellement bloqué, une oxazinone, une oxazolinone et un epoxy, et notamment parmi un anhydride, en particulier le dianhydride 3,3',4,4'-benzophénone tétracarboxylique, une oxazinone, une oxazolinone et un époxy.

17. Composition selon l'une des revendications 14 ou 15, dans laquelle X' est CO₂H et Y est choisi parmi un epoxy, une oxazoline, une oxazine, une imidazoline et une aziridine, comme le 1, 1'-iso- ou téré- phtaloyl-bis (2-methyl aziridine), notamment un epoxy et une oxazoline.

18. Composition selon la revendication 17, **caractérisée en ce que** X' est CO₂H et Y-A'-Y est choisi parmi les phénylènes bis oxazolines, de préférence la 1,3 - phénylène-bis(2-oxazoline) ou la 1,4-phénylène-bis(2-oxazoline) (PBO).

19. Composition selon la revendication 11, **caractérisée en ce que** elle comprend a1) au moins un prépolymère aminé (porteur de -NH2), dudit polymère polyamide semi-cristallin de la matrice thermoplastique, en particulier avec au moins 50% et plus particulièrement avec 100% des groupements terminaux dudit prépolymère a1) étant des fonctions d'amine primaire -NH2 et a2) au moins un allongeur de chaîne, non polymérique et porteur d'un groupement anhydride carboxylique cyclique, de préférence porté par un cycle aromatique, ayant comme substituant un groupement comprenant une insaturation éthylénique ou acétylénique, de préférence acétylénique, avec ledit allongeur a2) étant présent à un taux correspondant à un rapport molaire a2)/(-NH2) inférieur à 0,36, de préférence allant de 0,1 à 0,35, plus préférentiellement allant de 0,15 à 0,35 et encore plus préférentiellement allant de 0,15 à 0,31 et **en ce que** ledit polymère thermoplastique de la matrice est le produit de la réaction de polymérisation par allongement dudit prépolymère a1) par ledit allongeur a2).

20. Composition selon la revendication 19, **caractérisée en ce que** ledit allongeur a2) est choisi parmi les composés anhydrides aromatiques, de préférence o-phtaliques, substitués en position 4 du cycle aromatique par un substituant défini par un groupement R-C=C-(R')x- avec R étant un alkyl en C1-C2 ou H ou aryle, en particulier phényle ou R est le résidu d'un anhydride carboxylique aromatique, de préférence o-phtalique, lié à la triple liaison acétylénique par le carbone en position 4 du cycle aromatique et x étant égal à 0 ou à 1 et pour x étant égal à 1, R' étant un groupement carbonyle.

21. Composition selon l'une des revendications 19 ou 20, **caractérisée en ce que** ledit allongeur a2) est choisi parmi les composés anhydrides aromatiques o-phtaliques porteurs en position 4 d'un groupement substituant choisi parmi méthyl éthynyle, phényl éthynyle, 4-(o-phtaloyle) éthynyle, phényl éthynyl cétone aussi appelé anhydride phényl éthynyl trimellitique et de préférence porteurs en position 4 d'un groupement substituant choisi parmi méthyl éthynyle et phényl éthynyl cétone.

22. Composition selon l'une des revendications 19 à 21, **caractérisée en ce que** ledit allongeur a2) a un poids moléculaire inférieur ou égal à 500, de préférence inférieur ou égal à 400.

23. Composition selon l'une des revendications 1 à 22, **caractérisée en ce que** les fibres de renfort longues sont en particulier à section circulaire avec L/D > 1000, de préférence > 2000 et plus particulièrement sélectionnées parmi les fibres de verre, de carbone, de céramique, d'aramide ou leurs mélanges.

24. Composition selon l'une des revendications 1 à 23, **caractérisée en ce qu'**il s'agit d'une composition de moulage.

25. Procédé de fabrication d'un matériau composite thermoplastique, en particulier d'une pièce mécanique ou d'une pièce de structure à base dudit matériau, de composition telle que définie selon l'une des revendications 1 à 22, **caractérisé en ce qu'**il comprend au moins une étape de polymérisation d'au moins une composition réactive a) telle que définie selon l'une des revendications 11 à 22 ou une étape de moulage ou de mise en œuvre d'au moins une composition non réactive b), telle que définie selon la revendication 10.

26. Procédé selon la revendication 25, **caractérisé en ce qu'**il comprend les étapes suivantes :
i) imprégnation à l'état fondu d'un renfort fibreux long par une composition telle que définie selon l'une des revendications 1 à 23 mais ne comprenant pas ledit renfort fibreux long dans un moule ouvert ou fermé ou hors moule, afin d'obtenir une composition telle que définie selon l'une des revendications 1 à 23,
ii) réaction de polymérisation dans le cas d'une composition réactive a) de polyamide selon l'une des revendications 11 à 22, par chauffage de ladite composition de l'étape i) avec allongement de chaîne, suivant le cas, par réaction de polycondensation ou par réaction de polyaddition, en masse à l'état fondu, avec dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en oeuvre ou moulage de ladite composition de l'étape i) dans le cas d'une composition de polyamide non réactive b) pour former la pièce composite finale dans un moule ou avec un autre système de mise en oeuvre et, dans le cas d'une composition réactive a), une étape de mise en oeuvre par moulage ou par un autre système de mise en oeuvre et simultanément avec l'étape ii) de polymérisation.

27. Procédé selon la revendication 25 ou 26, caractérisé en ce ladite mise en œuvre est réalisée selon un procédé RTM, C-RTM, S-RIM, injection-compression, pultrusion ou par infusion, en particulier dans le cas d'une composition réactive a).

28. Polymère polyamide semi-cristallin, **caractérisé en ce qu'**il correspond au (ou est le) polymère de la matrice thermoplastique dudit matériau composite thermoplastique, tel que défini selon l'une des revendications 1 à 23, ledit polymère étant un polymère non réactif tel que défini selon ladite composition b) ou un polymère susceptible d'être obtenu à partir d'une composition réactive telle que définie selon ladite composition a).

29. Utilisation d'une composition telle que définie selon l'une des revendications 1 à 23 ou d'un polymère tel que défini selon la revendication 28, pour la fabrication de pièces mécaniques ou de structure à base dudit matériau composite.

30. Utilisation selon la revendication 29, **caractérisée en ce que** lesdites pièces mécaniques ou de structure dudit matériau composite concernent des applications dans le domaine de l'automobile, ferroviaire, marin (maritime), de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

31. Matériau composite thermoplastique **caractérisé en ce qu'**il comprend une matrice thermoplastique à base de polymère polyamide semi-cristallin telle que définie selon l'une des revendications 1 à 23.

32. Pièce mécanique ou de structure de matériau composite thermoplastique, **caractérisée en ce qu'**elle comprend une matrice thermoplastique à base de polymère polyamide semi-cristallin telle que définie selon l'une des revendications 1 à 23 ou qu'elle est à base d'un matériau composite tel que défini selon la revendication 31 ou qu'elle est obtenue par un procédé tel que défini selon l'une des revendications 25 à 27.

33. Pièce de structure selon la revendication 32, **caractérisée en ce qu'**il s'agit d'une pièce automobile post-traitée par cataphorèse.

34. Pièce selon la revendication 32, **caractérisée en ce qu'**il s'agit d'une pièce pour éolienne.

35. Pièce selon la revendication 32, **caractérisée en ce qu'**il s'agit d'une pièce pour l'aéronautique.

## Patentansprüche

1. Zusammensetzung für thermoplastisches Verbundmaterial, umfassend:
- 30 bis 60 Vol.-%, bevorzugt 35 bis 50 Vol.-%, eine thermoplastische Matrix, die von 50 bis 100 Gew.-% ein teilkristallines Polyamidpolymer und von 0 bis 50 Gew.-% mindestens ein Additiv und/oder mindestens ein anderes Polymer umfasst,
- 40 bis 70 Vol.-%, bevorzugt 50 bis 65 Vol.-%, lange Verstärkungsfasern (oder Langfaserverstärkung) die ein Verhältnis von Länge zu Durchmesser der Faser größer als 1000 vorweisen, wobei die thermoplastische Matrix die langen Verstärkungsfasern (oder die Langfaserverstärkung) imprägniert,
wobei die thermoplastische Matrix Folgendes ist:
a) eine reaktive Zusammensetzung, die mindestens einen reaktiven Polyamidpräpolymervorläufer des teilkristallinen Polyamidpolymers umfasst oder daraus besteht,
oder alternativ zu a)
b) eine nicht-reaktive Zusammensetzung aus mindestens einem Polyamidpolymer, wobei die Zusammensetzung die der obenstehend definierten thermoplastischen Matrix ist,
und wobei das reaktive Polyamidpräpolymer der Zusammensetzung a) und das Polyamidpolymer der Zusammensetzung b) mindestens ein BACT/XT-Copolyamid umfassen oder daraus bestehen, wobei:
- BACT eine Amidmotiveinheit ist, die in einem Molverhältnis im Bereich von 20 bis 70 %, vorzugsweise von 25 bis 60 %, mehr bevorzugt von 35 bis 55 %, vorhanden ist, wobei BAC gewählt ist aus 1,3-Bis(aminomethyl)cyclohexyl (1,3-BAC), 1,4-Bis(aminomethyl)cyclohexyl (1,4-BAC) und einer Mischung davon, und T Terephthalsäure ist,
- XT eine Amidmotiveinheit ist, die in einem Molverhältnis im Bereich von 30 bis 80 %, vorzugsweise von 40 bis 75 %, mehr bevorzugt von 45 bis 65 %, vorhanden ist, wobei X ein lineares aliphatisches C9- bis C18-, vorzugsweise C9-, C10-, C11- und C12-Diamin ist und wobei T bevorzugt C10-, C11- und C12-Terephthalsäure ist,
- in den BACT- und/oder XT-Einheiten bezogen auf die Gesamtmenge der Dicarbonsäuren unabhängig voneinander bis zu 30 Mol-%, vorzugsweise 20 Mol-%, insbesondere bis zu 10 Mol-% Terephthalsäure durch andere aromatische, aliphatische oder cycloaliphatische Dicarbonsäuren, umfassend 6 bis 36 Kohlenstoffatome, insbesondere 6 bis 14 Kohlenstoffatome, ersetzt sein kann und
- in den BACT- und/oder XT-Einheiten bezogen auf die Gesamtmenge der Diamine unabhängig voneinander bis zu 30 Mol-%, vorzugsweise 20 Mol-%, insbesondere bis zu 10 Mol-% BAC und/oder je nach Fall X durch andere Diamine, umfassend 4 bis 36 Kohlenstoffatome, insbesondere 6 bis 12 Kohlenstoffatome, ersetzt sein können und
- in dem Copolyamid bezogen auf die Gesamtmenge der Monomere nicht mehr als 30 Mol-%, vorzugsweise nicht mehr als 10 Mol-% durch Lactame oder Aminocarbonsäuren gebildet sein können und
- unter der Voraussetzung, dass die Summe der Monomere, die Terephthalsäure, BAC und X ersetzen, bezogen auf die Gesamtmenge der in dem Copolyamid verwendeten Monomere eine Konzentration von 30 Mol-%, vorzugsweise 10 Mol-%, nicht überschreitet und
- unter der Voraussetzung, dass BACT- und XT-Einheiten in dem Polyamidpolymer immer vorhanden sind.

2. Zusammensetzung nach Anspruch 1, wobei das teilkristalline Polyamidpolymer eine Schmelztemperatur Tf von < 290 °C, vorzugsweise < 285 °C, mehr bevorzugt < 280 °C, wie nach der Norm ISO 11357-3 (2013) bestimmt, vorweist.

3. Zusammensetzung nach Anspruch 1 oder 2, wobei das teilkristalline Polyamidpolymer eine Glasübergangstemperatur Tg von > 120 °C, vorzugsweise > 130 °C, mehr bevorzugt > 140 °C, bestimmt nach der Norm ISO 11357-2 (2013), vorweist.

4. Zusammensetzung nach einem der Ansprüche 1 bis 3, wobei das teilkristalline Polyamidpolymer eine Differenz zwischen der Schmelztemperatur und der Kristallisationstemperatur Tf-Tc von < 40 °C, bevorzugt < 30 °C, bestimmt nach der Norm ISO 11357-3:2013, vorweist.

5. Zusammensetzung nach einem der Ansprüche 1 bis 4, **dadurch gekennzeichnet, dass** die Kristallisationsenthalpie des teilkristallinen Polyamidpolymers, gemessen durch dynamische Differenzkalorimetrie (DSC) nach der Norm ISO 11357-3:2013, größer als 40 J/g, vorzugsweise größer als 45 J/g, mehr bevorzugt größer als 50 J/g ist.

6. Zusammensetzung nach einem der Ansprüche 1 bis 5, wobei BAC 1,3-BAC ist.

7. Zusammensetzung nach einem der Ansprüche 1 bis 6, wobei BAC 1,3-BAC ist und XT aus 9T, 10T, 11T und 12T, mehr bevorzugt 10T, 11T und 12T, gewählt ist.

8. Zusammensetzung nach einem der Ansprüche 1 bis 7, wobei XT 10T ist, wobei 10 1,10-Decandiamin entspricht.

9. Zusammensetzung nach einem der Ansprüche 1 bis 8, wobei die Summe der Monomere, die die Terephthalsäure, BAC und X ersetzen, gleich 0 ist.

10. Zusammensetzung nach einem der Ansprüche 1 bis 9, **dadurch gekennzeichnet, dass** die thermoplastische Matrix eine nicht-reaktive Zusammensetzung gemäß b) ist.

11. Zusammensetzung nach einem der Ansprüche 1 bis 9, **dadurch gekennzeichnet, dass** die thermoplastische Matrix eine reaktive Zusammensetzung aus Präpolymer gemäß a) und Vorläufer des Polyamidpolymers der Matrix des Verbundstoffs ist.

12. Zusammensetzung nach Anspruch 11, **dadurch gekennzeichnet, dass** die Zusammensetzung a) mindestens ein reaktives Präpolymer umfasst oder daraus besteht, das an der gleichen Kette zwei Endfunktionen X' und Y' trägt, Funktionen, die jeweils durch Kondensation miteinander coreaktiv sind, wobei X' und Y' jeweils Amin und Carboxyl oder Carboxyl und Amin sind.

13. Zusammensetzung nach Anspruch 11, **dadurch gekennzeichnet, dass** die reaktive Zusammensetzung a) mindestens zwei Polyamidpräpolymere umfasst, die miteinander reaktiv sind und jeweils zwei identische Endfunktionen X' oder Y' tragen, wobei die Funktion X' eines Präpolymers ausschließlich mit der Funktion Y' des anderen Präpolymers reagieren kann, insbesondere durch Kondensation, vor allem wenn X' und Y' jeweils Amin und Carboxyl oder Carboxyl und Amin sind.

14. Zusammensetzung nach Anspruch 11, **dadurch gekennzeichnet, dass** die Zusammensetzung a) oder Vorläuferzusammensetzung Folgendes umfasst oder daraus besteht:
a1) mindestens ein Präpolymer des thermoplastischen Polyamidpolymers, das n reaktive Endfunktionen X' trägt, gewählt aus: -NH₂, -CO₂H und -OH, vorzugsweise NH₂ und -CO₂H, wobei n 1 bis 3, vorzugsweise von 1 bis 2, mehr bevorzugt 1 oder 2, vor allem 2 ist
a2) mindestens einen Kettenverlängerer Y-A'-Y, wobei A' ein Kohlenwasserstoffbiradikal mit nicht polymerer Struktur ist, das 2 identische reaktive Endfunktionen Y trägt, die durch Polyaddition mit mindestens einer Funktion X' des Präpolymers a1) reaktiv sind, vorzugsweise mit einer Molmasse kleiner oder gleich 500, mehr bevorzugt kleiner oder gleich 400.

15. Zusammensetzung nach einem der Ansprüche 11 bis 14, **dadurch gekennzeichnet, dass** die reaktiven Präpolymere der Zusammensetzung a) eine zahlenmittlere Molmasse Mn im Bereich von 500 bis 10000, vorzugsweise von 1000 bis 6000, aufweisen.

16. Zusammensetzung nach einem der Ansprüche 14 oder 15, wobei X' NH₂ oder OH, insbesondere NH₂, ist und Y aus einem Anhydrid, einem Maleimid, einem gegebenenfalls blockierten Isocyanat, einem Oxazinon, einem Oxazolinon und einem Epoxid und besonders aus einem Anhydrid, insbesondere 3,3',4,4'-Benzophenontetracarbonsäuredianhydrid, einem Oxazinon, einem Oxazolinon und einem Epoxid gewählt ist.

17. Zusammensetzung nach einem der Ansprüche 14 oder 15, wobei X' CO₂H ist und Y aus einem Epoxid, einem Oxazolin, einem Oxazin, einem Imidazolin und einem Aziridin wie 1,1'-Iso- oder Terephthaloyl-bis-(2-methylaziridin), besonders einem Epoxid und einem Oxazolin, gewählt ist.

18. Zusammensetzung nach Anspruch 17, **dadurch gekennzeichnet, dass** X' CO₂H ist und Y-A'-Y aus Phenylen-bis-oxazolinen, vorzugsweise 1,3-Phenylen-bis(2-oxazolin) oder 1,4-Phenylen-bis(2-oxazolin) (PBO) gewählt ist.

19. Zusammensetzung nach Anspruch 11, **dadurch gekennzeichnet, dass** sie a1) mindestens ein aminiertes Präpolymer (-NH2-Träger) des teilkristallinen Polyamidpolymers der thermoplastischen Matrix umfasst, wobei insbesondere mindestens 50 % und vor allem 100 % der Endgruppen des Präpolymers a1) primäre -NH2-Aminfunktionen sind und a2) mindestens einen nicht-polymeren Kettenverlängerer umfasst, der eine cyclische Carbonsäureanhydridgruppe trägt, vorzugsweise getragen von einem aromatischen Ring, mit einer Gruppe als Substituenten, die eine ethylenische oder acetylenische, vorzugsweise acetylenische Ungesättigtheit umfasst, wobei der Verlängerer a2) in einer Menge vorhanden ist, die einem Molverhältnis a2)/(-NH2) kleiner als 0,36, vorzugsweise im Bereich von 0,1 bis 0,35, mehr bevorzugt im Bereich von 0,15 bis 0,35 und noch mehr bevorzugt im Bereich von 0,15 bis 0,31, entspricht, **und dadurch, dass** das thermoplastische Polymer der Matrix das Produkt der Polymerisationsreaktion durch Verlängerung des Präpolymers a1) durch den Verlängerer a2) ist.

20. Zusammensetzung nach Anspruch 19, **dadurch gekennzeichnet, dass** der Verlängerer a2) aus aromatischen Anhydridverbindungen, vorzugsweise o-Phthalsäureanhydridverbindungen, die in Position 4 des aromatischen Rings durch einen Substituenten substituiert sind, der durch eine Gruppe R-C=C-(R')x- definiert ist, wobei R ein C1-C2-Alkyl oder H oder Aryl ist, gewählt ist, wobei insbesondere Phenyl oder R der Rest eines aromatischen Carbonsäureanhydrids, vorzugsweise o-Phthalsäureanhydrid, ist, das über das Kohlenstoffatom in Position 4 des aromatischen Rings an die acetylenische Dreifachbindung gebunden ist, und wobei x gleich 0 oder 1 ist und für x gleich 1 R' eine Carbonylgruppe ist.

21. Zusammensetzung nach einem der Ansprüche 19 oder 20, **dadurch gekennzeichnet, dass** der Verlängerer a2) aus den aromatischen o-Phthalsäureanhydridverbindungen gewählt ist, die in Position 4 eine Substituentengruppe tragen, die aus Methylethinyl-, Phenylethinyl-, 4-(o-Phthaloyl)-ethinyl-, Phenylethinylketon, auch Phenylethinyltrimellitsäureanhydrid genannt, gewählt ist, und die vorzugsweise in Position 4 eine Substituentengruppe tragen, die aus Methylethinyl- und Phenylethinylketon gewählt ist.

22. Zusammensetzung nach einem der Ansprüche 19 bis 21, **dadurch gekennzeichnet, dass** der Verlängerer a2) ein Molekulargewicht von kleiner oder gleich 500, vorzugsweise kleiner oder gleich 400, aufweist.

23. Zusammensetzung nach einem der Ansprüche 1 bis 22, **dadurch gekennzeichnet, dass** die langen Verstärkungsfasern insbesondere mit einem kreisförmigen Querschnitt mit L/D > 1000, vorzugsweise > 2000, vorliegen und vor allem aus Glas-, Kohlenstoff-, Keramik-, Aramidfasern oder deren Mischungen ausgewählt sind.

24. Zusammensetzung nach einem der Ansprüche 1 bis 23, **dadurch gekennzeichnet, dass** es sich um eine Formzusammensetzung handelt.

25. Verfahren zur Herstellung eines thermoplastischen Verbundmaterials, insbesondere eines mechanischen Teils oder Strukturteils auf Basis des Materials, mit einer Zusammensetzung wie nach einem der Ansprüche 1 bis 22 definiert, **dadurch gekennzeichnet, dass** es mindestens einen Polymerisationsschritt mindestens einer reaktiven Zusammensetzung a) wie nach einem der Ansprüche 11 bis 22 definiert oder einen Form- oder Einsatzschritt mindestens einer nicht reaktiven Zusammensetzung b) wie nach Anspruch 10 definiert umfasst.

26. Verfahren nach Anspruch 25, **dadurch gekennzeichnet, dass** es die folgenden Schritte umfasst:
i) Imprägnierung, in geschmolzenem Zustand, einer Langfaserverstärkung durch eine Zusammensetzung wie nach einem der Ansprüche 1 bis 23 definiert, nicht jedoch umfassend die Langfaserverstärkung in offener oder geschlossener Form oder außerhalb einer Form, um eine Zusammensetzung wie nach einem der Ansprüche 1 bis 23 definiert zu erhalten,
ii) Polymerisationsreaktion in dem Fall einer reaktiven Polyamidzusammensetzung a) nach einem der Ansprüche 11 bis 22 durch Erwärmen der Zusammensetzung aus Schritt i) mit Kettenverlängerung, je nach Fall durch Polykondensationsreaktion oder durch Polyadditionsreaktion in Masse in geschmolzenem Zustand, im Fall der Polykondensation mit Beseitigung der Kondensationsprodukte unter Vakuum mithilfe eines Vakuumextraktionssystems, wenn es sich um eine geschlossene Form handelt, wobei andernfalls und vorzugsweise die Polykondensation in offener Form oder außerhalb einer Form durchgeführt wird,
iii) eine Anwendung oder ein Formen der Zusammensetzung aus Schritt i) im Fall einer nicht-reaktiven Polyamidzusammensetzung b) zum Bilden des endgültigen Verbundstoffteils in einer Form oder mit einem anderen Einsatzsystem, und im Fall einer reaktiven Zusammensetzung a) ein Schritt des Einsetzens durch Formen oder durch ein anderes Einsatzsystem und zeitgleich mit dem Polymerisationsschritt ii).

27. Verfahren nach Anspruch 25 oder 26, **dadurch gekennzeichnet, dass** das Einsetzen nach einem RTM-, C-RTM-, S-RIM, Einspritz-Kompressions-, Strangzieh- oder Infusionsverfahren durchgeführt wird, insbesondere im Fall einer reaktiven Zusammensetzung a).

28. Teilkristallines Polyamidpolymer, **dadurch gekennzeichnet, dass** es dem Polymer der thermoplastischen Matrix des thermoplastischen Verbundmaterials wie nach einem der Ansprüche 1 bis 23 definiert entspricht (oder dieses ist), wobei das Polymer ein nicht-reaktives Polymer wie gemäß der Zusammensetzung b) definiert oder ein Polymer ist, das ausgehend von einer reaktiven Zusammensetzung wie gemäß Zusammensetzung a) definiert erhalten werden kann.

29. Verwendung einer Zusammensetzung wie nach einem der Ansprüche 1 bis 23 definiert oder eines Polymers wie nach Anspruch 28 definiert zur Herstellung von mechanischen Teilen oder Strukturteilen auf Basis des Verbundmaterials.

30. Verwendung nach Anspruch 29, **dadurch gekennzeichnet, dass** die mechanischen Teile oder Strukturteile des Verbundmaterials Anwendungen im Automobil-, Eisenbahn-, Schifffahrt- (Maritim), Windkraft-, Photovoltaik-, Solar-, einschließlich Sonnenkollektoren und Komponenten von Solarkraftwerken, Sport-, Luft- und Raumfahrt-, Straßentransport- (betreffend Lastkraftwagen), Bausektor-, Hoch- und Tiefbau-, Beschilderungs- und Freizeitbereich betreffen.

31. Thermoplastisches Verbundmaterial, **dadurch gekennzeichnet, dass** es eine thermoplastische Matrix auf Basis von teilkristallinem Polyamidpolymer wie nach einem der Ansprüche 1 bis 23 definiert umfasst.

32. Mechanisches Teil oder Strukturteil aus thermoplastischem Verbundmaterial, **dadurch gekennzeichnet, dass** es eine thermoplastische Matrix auf Basis von teilkristallinem Polyamidpolymer wie nach einem der Ansprüche 1 bis 23 definiert umfasst oder dass es auf einem Verbundmaterial wie nach Anspruch 31 definiert basiert, oder dass es durch ein Verfahren wie nach einem der Ansprüche 25 bis 27 definiert erhalten wird.

33. Strukturteil nach Anspruch 32, **dadurch gekennzeichnet, dass** es sich um ein durch Kataphorese nachbehandeltes Automobilteil handelt.

34. Teil nach Anspruch 32, **dadurch gekennzeichnet, dass** es sich um ein Teil für Windkraftanlagen handelt.

35. Teil nach Anspruch 32, **dadurch gekennzeichnet, dass** es sich um ein Teil für die Luftfahrt handelt.

## Claims

1. A composition for a thermoplastic composite material comprising:
- 30 to 60% by volume, preferably 35 to 50% by volume, of a thermoplastic matrix comprising from 50 to 100% by weight of a semicrystalline polyamide polymer and from 0 to 50% by weight of at least one additive and/or of at least one other polymer;
- 40 to 70% by volume, preferably 50 to 65% by volume, of long reinforcing fibers (or of long fibrous reinforcement) having a ratio of length to diameter of the fiber over 1000;
said thermoplastic matrix impregnating said long reinforcing fibers (or said long fibrous reinforcement); and
said thermoplastic matrix being:
a) a reactive composition comprising or consisting of at least one reactive precursor polyamide prepolymer of said semi-crystalline polyamide polymer,
or as an alternative to a),
b) a non-reactive composition of at least one polyamide polymer, said composition being that of said thermoplastic matrix defined above,
and said reactive polyamide prepolymer of composition a) and said polyamide polymer of composition b) comprising or consisting of at least one BACT/XT copolyamide wherein:
- BACT is a unit with an amide motif present at a molar content ranging from 20 to 70%, preferably from 25 to 60%, more preferably from 35 to 55%, where BAC is chosen from among 1,3-bis(aminomethyl)cyclohexyl (1,3-BAC), 1,4-bis(aminomethyl)cyclohexyl (1,4-BAC) or a mixture thereof, and T is terephthalic acid;
- XT is a unit with an amide motif present at a molar content ranging from 30 to 80%, preferably from 40 to 75%, more preferably from 45 to 65%, where X is a C9 to C18 linear aliphatic diamine, preferably C9, C10, C11 and C12, and where T is terephthalic acid, preferably C10, C11 and C12.
- in the BACT and/or XT units, independently of each other, up to 30 mol%, preferably 20 mol%, in particular up to 10 mol% of terephthalic acid, relative to the total quantity of the dicarboxylic acids, can be replaced by other aromatic, aliphatic or cycloaliphatic dicarboxylic acids comprising 6 to 36 carbon atoms, in particular 6 to 14 carbon atoms, and
- in the BACT and/or XT units, independently of each other, up to 30 mol%, preferably 20 mol%, particularly up to 10 mol%, of the BAC and/or if applicable of X, relative to the total quantity of the diamines, can be replaced by other diamines comprising from 4 to 36 carbon atoms, particularly 6 to 12 carbon atoms, and
- in the copolyamide, not more than 30 mol%, preferably not more than 10 mol%, relative to the total quantity of the monomers, can be formed by lactams or aminocarboxylic acids, and
- provided that the sum of the monomers that replace the terephthalic acid, the BAC and X does not exceed a concentration of 30 mol%, preferably 10 mol%, relative to the total quantity of the monomers used in the copolyamide, and
- provided that BACT and XT units are still present in said polyamide polymer.

2. The composition according to claim 1, wherein said semi-crystalline polyamide polymer has a melting temperature Tm <290°C, preferably <285°C, more preferably <280°C, as determined according to standard ISO 11357-3 (2013).

3. The composition according to claim 1 or 2, wherein said semi-crystalline polyamide polymer has a glass transition temperature Tg > 120°C, preferably > 130°C, more preferably > 140°C, determined according to standard ISO 11357-2:2013.

4. The composition according to one of claims 1 to 3, wherein said semi-crystalline polyamide polymer has a difference between the melting temperature and the crystallization temperature Tm -Tc < 40°C, preferably < 30°C, determined according to standard ISO 11357-3:2013.

5. The composition according to one of claims 1 to 4, **characterized in that** the enthalpy of crystallization of the semi-crystalline polyamide polymer, measured by differential scanning calorimetry (DSC) according to standard ISO 11357-3:2013, is greater than 40 J/g, preferably greater than 45 J/g, more preferably greater than 50 J/g.

6. The composition according to one of claims 1 to 5, wherein the BAC is 1,3-BAC.

7. The composition according to one of claims 1 to 6, wherein the BAC is 1,3-BAC and XT is selected from 9T, 10T, 11T and 12T, more preferably 10T, 11T and 12T.

8. The composition according to one of claims 1 to 7, wherein XT is 10T, 10 corresponding to 1,10-decanediamine.

9. The composition according to one of claims 1 to 8, wherein the sum of the monomers that replace the terephthalic acid, the BAC and X is equal to 0.

10. The composition according to one of claims 1 to 9, **characterized in that** said thermoplastic matrix is a non-reactive composition according to b).

11. The composition according to one of claims 1 to 9, **characterized in that** said thermoplastic matrix is a reactive prepolymer composition according to a) and a precursor of said polyamide polymer of said matrix of the composite.

12. The composition according to claim 11, **characterized in that** said composition a) comprises or consists of at least one reactive prepolymer carrying on the same chain two terminal functions X' and Y', functions that respectively react together by condensation, with X' and Y' being amine and carboxyl or carboxyl and amine respectively.

13. The composition according to claim 11, **characterized in that** said reactive composition a) comprises at least two polyamide prepolymers that react together and each carry respectively two identical terminal functions X' or Y', said function X' of a prepolymer being capable of reacting only with said function Y' of the other prepolymer, particularly by condensation, more particularly with X' and Y' being amine and carboxyl or carboxyl and amine respectively.

14. The composition according to claim 11, **characterized in that** said composition a) or precursor composition, comprises or consists of:
a1) at least one prepolymer of said thermoplastic polyamide polymer, bearing n reactive terminal functions X', selected from: -NH₂, -CO₂H and -OH, preferably NH₂ and -CO₂H with n being from 1 to 3, preferably from 1 to 2, more preferably 1 or 2, more particularly 2
a2) at least one chain extender Y-A'-Y, with A' being a hydrocarbon biradical, with non-polymeric structure, bearing 2 identical terminal reactive functions Y, reactive by polyaddition with at least one function X' of said prepolymer a1), preferably having a molecular mass less than or equal to 500, more preferably less than or equal to 400.

15. The composition according to one of claims 11 to 14, **characterized in that** said reactive prepolymers of said composition a) have a number average molecular weight Mn ranging from 500 to 10 000, preferably from 1000 to 6000.

16. The composition according to one of claims 14 or 15, wherein X' is NH₂ or OH, in particular NH₂, and Y is selected from an anhydride, maleimide, isocyanate which may be blocked, oxazinone, oxazolinone and epoxy, and in particular from an anhydride, in particular 3,3',4,4'-benzophenone tetracarboxylic dianhydride, an oxazinone, an oxazolinone and an epoxy.

17. The composition according to one of claims 14 or 15, wherein X' is CO₂H and Y is chosen from an epoxy, an oxazoline, an oxazine, an imidazoline, and one aziridine, like 1,1'-iso- or tere- phthaloyl-bis (2-methylaziridine), in particular an epoxy and an oxazoline.

18. The composition according to claim 17, **characterized in that** X' is CO₂H and Y-A'-Y is selected from the phenylene-bis-oxazolines, preferably 1,3-phenylene-bis(2-oxazoline) or 1,4-phenylene-bis(2-oxazoline) (PBO).

19. The composition according to claim 11, **characterized in that** it comprises a1) at least one amine prepolymer (carrying -NH2), of said semicrystalline polyamide polymer of the thermoplastic matrix, in particular with at least 50% and more particularly with 100% of the terminal groupings of said prepolymer a1) being primary amine functions -NH₂ and a2) at least one chain extender, non-polymeric and carrying a cyclic carboxylic anhydride group, preferably carried by an aromatic ring, having as a substituent a group comprising an ethylenic or acetylenic unsaturation, preferably acetylenic, with said extender a2) being present at a level corresponding to an a2)/(-NH2) molar ratio less than 0.36, preferably ranging from 0.1 to 0.35, more preferably ranging from 0.15 to 0.35 and still more preferably ranging from 0.15 to 0.31 **and in that** said thermoplastic polymer of the matrix is the product of the polymerization reaction by extending said prepolymer a1) by said extender a2).

20. The composition according to claim 19, **characterized in that** said extender a2) is selected from aromatic anhydride compounds, preferably o-phthalic compounds, substituted in the 4-position of the aromatic ring by a substituent defined by a R-C≡C-(R')x- group with R being a C1-C2 alkyl or H or aryl, particularly phenyl or R is the residue of an aromatic carboxylic anhydride, preferably o-phthalic, bound to the acetylene triple bond by the carbon in the 4-position of the aromatic ring and x being equal to 0 or to 1 and for x being equal to 1, R' being a carbonyl group.

21. The composition according to one of claims 19 or 20, **characterized in that** said extender a2) is selected from aromatic o-phthalic anhydride compounds carrying in the 4-position a substituent group selected from methyl ethynyl, phenyl ethynyl, 4-(o-phthaloyl) ethynyl, phenyl ethynyl ketone also called phenyl ethynyl trimellitic anhydride and preferably carrying in the 4-position a substituent group selected from methyl ethynyl and phenyl ethynyl ketone.

22. The composition according to one of claims 19 to 21, **characterized in that** said extender a2) has a molecular weight less than or equal to 500, preferably less than or equal to 400.

23. The composition according to one of claims 1 to 22, **characterized in that** the long reinforcing fibers have in particular a circular cross-section with L/D > 1000, preferably > 2000 and more particularly selected from glass, carbon, ceramic, aramid fibers or mixtures thereof.

24. The composition according to one of claims 1 to 23, **characterized in that** it is a molding composition.

25. A production method for a composite thermoplastic material, in particular for a mechanical part or a structural part the base of which is said material, with composition as defined according to one of claims 1 to 22, **characterized in that** it comprises at least one step of polymerization of at least one reactive composition a) as defined according to one of claims 11 to 22 or a step of molding or of implementing at least one non-reactive composition b), as defined according to claim 10.

26. The method according to claim 25, **characterized in that** it comprises the following steps:
i) impregnation when melted of a long fibrous reinforcement by a composition as defined according to one of claims 1 to 23 but not comprising said long fibrous reinforcement in an open or closed mold or without a mold, to produce a composition as defined according to one of claims 1 to 23,
ii) polymerization reaction in the case of a reactive polyamide composition a) according to one of claims 11 to 22, by the heating of said composition from step i) with chain extension, according to the case, by polycondensation reaction or by polyaddition reaction, in the mass when melted, with in the case of the polycondensation, an elimination under vacuum of the condensation products when it is a closed mold, using an extraction system under vacuum, otherwise and preferably with the polycondensation being conducted in an open mold or out of a mold,
iii) an implementation or molding of said composition from step i) in the case of a non-reactive polyamide composition b) to form the final composite part in a mold or with another implementation system and, in the case of a reactive composition a), a step of implementation by molding or by another implementation system and simultaneously with polymerization step ii).

27. The method according to claim 25 or 26 **characterized in that** said implementation is achieved according to an RTM, C-RTM, S-RIM, injection-compression, pultrusion method or by infusion, in particular in the case of a reactive composition a).

28. A semi-crystalline polyamide polymer, **characterized in that** it corresponds to (or is) the polymer of the thermoplastic matrix of said thermoplastic composite material, as defined according to one of claims 1 to 23, said polymer being a non-reactive polymer as defined according to said composition b) or a polymer that can be obtained from a reactive composition as defined according to said composition a).

29. The use of a composition as defined according to one of claims 1 to 23 or of a polymer such as defined according to claim 28, for the manufacturing of mechanical or structural parts based on said composite material.

30. The use according to claim 29, **characterized in that** said mechanical or structural parts of said composite material relate to applications in the domain of automotive, rail, marine (maritime), wind power, photovoltaic, solar, including solar panels and components for solar plants, sports, aeronautics and space, road transport (relating to trucks), construction, civil engineering, signs and leisure.

31. A thermoplastic composite material **characterized in that** it comprises a thermoplastic matrix based on semicrystalline polyamide polymer as defined according to one of claims 1 to 23.

32. A mechanical or structural part of thermoplastic composite material, **characterized in that** it comprises a thermoplastic matrix based on semicrystalline polyamide polymer as defined according to one of claims 1 to 23 or **in that** it is based on a composite material as defined according to claim 31 or **in that** it is obtained by a method as defined according to one of claims 25 to 27.

33. The structural part according to claim 32, **characterized in that** it is an automobile part post-treated by cataphoresis.

34. The part according to claim 32, **characterized in that** it is a part for a wind turbine.

35. The part according to claim 32, **characterized in that** it is a part for aeronautics.
